# EUROPEAN PATENT SPECIFICATION

(11) **EP 4 181 433 B1**
(45) Date of publication and mention of the grant of the patent: **30.09.2026**
(21) Application number: 21838338.8
(22) Date of filing: 24.06.2021
(51) Int. Cl.: H04L 65/1016, H04L 65/1046, H04L 65/1069, H04L 65/1073, H04L 65/1063

(54) **APPLICATION MANAGEMENT METHOD AND APPARATUS**
ANWENDUNGSVERWALTUNGSVERFAHREN UND -VORRICHTUNG
PROCÉDÉ ET APPAREIL DE GESTION D'APPLICATION

(30) Priority: 09.07.2020 CN 202010657634
(43) Date of publication of application: 17.05.2023
(73) Proprietor: Huawei Technologies Co., Ltd., Longgang Shenzhen, Guangdong 518129 (CN)
(72) Inventor: WEI, Haitao, Shenzhen, Guangdong 518129 (CN); YE, Jinzhou, Shenzhen, Guangdong 518129 (CN)
(74) Representative: Maiwald GmbH
(86) International application number: PCT/CN2021/102115
(87) International publication number: WO 2022/007639

(56) References cited:
- WO-A1-2015/142233
- CN-A- 103 959 857
- CN-A- 106 209 998
- CN-A- 110 933 013
- US-A1- 2013 078 949
- US-A1- 2020 213 290
- US-B1- 7 069 330

## Description

This application claims priority to Chinese Patent Application No. 202010657634.X, filed with the China National Intellectual Property Administration on July 9, 2020, and entitled "APPLICATION MANAGEMENT METHOD AND APPARATUS".

### TECHNICAL FIELD

Embodiments of this application relate to the communication field, and more specifically, to an application management method and apparatus.

### BACKGROUND

An internet protocol multimedia subsystem (Internet Protocol Multimedia Subsystem, IMS) is a multimedia service form, and can meet a requirement for more novel and diversified multimedia services of a terminal customer. The IMS is recognized as a core technology of a next generation network, and is an important manner of implementing convergence of mobile and fixed networks and introduction of differentiated services such as convergence of voice, data, and video.

With development of electronic information technologies, types and a quantity of applications whose data is transmitted through the IMS grow rapidly. In addition, the current IMS lacks management and control on the applications. Consequently, communication resource competition occurs, affecting user experience, and system security is threatened.

WO 2015/142233 A1 describes an application user control.

US 2013/078949 A1 describes managing mobile device application.

US 2020/213290 A1 discloses an authorization method and a network element are disclosed.

### SUMMARY

This application provides an application management method and apparatus, to improve user experience and improve system security.

The present invention is defined by the subject-matter of the independent claims. Additional features of the invention are presented in the dependent claims.

According to a first aspect, an application management method is provided. The method includes: A first network device receives first information from a first terminal device, where the first information includes an identifier of a first application and an identifier of the first terminal device. The first network device obtains user data of the first terminal device based on the identifier of the first terminal device, where the user data of the first terminal device includes an identifier of an authorized application corresponding to the first terminal device, and/or the user data of the first terminal device includes an identifier of an unauthorized application corresponding to the first terminal device. The first network device determines, based on the user data of the first terminal device, whether to allow the first terminal device to transmit data of the first application.

By way of example, and not limitation, this solution of this application is applicable to a communication system, for example, an IMS system, through which data of an application can be transmitted.

The "authorized application corresponding to the first terminal device" may be understood as an application whose data is allowed, by the communication system (for example, the IMS system), to be transmitted by the first terminal device through the communication system.

To be specific, if an application #x is the authorized application corresponding to the first terminal device, the IMS system (which specifically refers to a network device in the IMS system, for example, an AS) allows data of the application #x installed on the first terminal device to be transmitted through the IMS system. For example, the AS allows establishment of a data channel used to transmit the data of the application #x installed on the first terminal device.

The "unauthorized application corresponding to the first terminal device" may be understood as an application whose data is prohibited, by the communication system (for example, the IMS system), from being transmitted by the first terminal device through the communication system.

To be specific, if an application #y is the unauthorized application corresponding to the first terminal device, the IMS system (which specifically refers to the network device in the IMS system, for example, the AS) does not allow data of the application #y installed on the first terminal device to be transmitted through the IMS system. For example, the AS prohibits establishment of a data channel used to transmit the data of the application #y installed on the first terminal device.

According to this solution provided in this application, the first terminal device sends, to the first network device in the IMS, the identifier of the first application that the first terminal device expects to transmit through the IMS, so that the first network device can obtain information of the authorized application (or the unauthorized application) of the first terminal device based on the identifier of the first terminal device. Further, the first network device can determine whether to allow the first terminal device to transmit the data of the first application through the IMS system. In this way, management and control on applications can be implemented, allocation of communication resources can be optimized, user experience can be improved, and system security can be improved.

Optionally, that the first network device obtains user data of the first terminal device based on the identifier of the first terminal device includes: The first network device sends second information to a second network device, where the second information is used to request the user data of the first terminal device, the second information includes the identifier of the first terminal device, and the second network device is configured to store user data of each terminal device among a plurality of terminal devices including the first terminal device. The first network device receives the user data of the first terminal device from the second network device.

By way of example, and not limitation, the second network device is, for example, a home subscriber server (Home Subscriber Server, HSS).

In an implementation, the first network device is a call session control function CSCF device.

In this case, the first information may be a registration request of an internet protocol multimedia subsystem IMS network.

In other words, the first information may be carried in the registration request.

In this case, the method further includes: The first network device sends a registration response to the first terminal device, where the registration response includes a result indicating whether the first terminal device is allowed to transmit the data of the first application.

In this way, the first terminal device can determine, based on the result, whether to transmit (receive or send) the data of the first application through the IMS. For example, the first terminal device determines whether to initiate a request for establishing a data channel used to transmit the data of the first application.

Optionally, the method further includes: The first network device sends, to the application server AS, the result indicating whether the first terminal device is allowed to transmit the data of the first application.

In this way, the AS can determine, based on the result, whether to allow the first terminal device to transmit the data of the first application. For example, the AS determines whether to allow establishment of the data channel used by the first terminal device to transmit the data of the first application.

In another implementation, the first network device is a first AS.

In this case, the first information may be a first data channel establishment request.

In other words, the first information may be carried in the first data channel establishment request.

For example, the first data channel establishment request is a request for establishing a channel for transmitting data of a second application between the first terminal device and a second terminal device. In addition, by way of example, and not limitation, the second application may include, for example, a video call application or a voice call application. In other words, the first application may include an application expected to be used when the first terminal device interacts with the second terminal device through the second application. For example, the second application may be referred to as a basic application, and the first application may be referred to as an additional application relative to the basic application. For example, the second application may be a voice over long term evolution (Voice over Long Term Evolution, VoLTE) call (call) application. In addition, in this case, the channel used to transmit the data of the first application may be a fifth generation communication data channel (5G Data Channel).

Alternatively, the first data channel establishment request is a request for establishing the channel for transmitting the data of the first application between the first terminal device and the second terminal device (or a server providing the first application).

Optionally, the first data channel establishment request further includes third information. The third information is used to indicate a first obtaining manner among a plurality of obtaining manners. The first obtaining manner is a manner that is requested to be used by the first terminal device to obtain an installation file of the first application. The plurality of obtaining manners include at least one of the following manners: a manner of obtaining from a third party, a manner of downloading from an application server of a network in which the first terminal device is located, a manner of downloading from an application server of a network in which the second terminal device is located, and a manner of obtaining from the second terminal device. The second terminal device is a communication peer end of the first terminal device.

"A manner of obtaining from a third party" may also be understood as a manner of obtaining by the first terminal device itself (for example, from an application store and a website, or through manual installation by a user).

The first terminal device reports the manner of obtaining the installation file of the first application, so that the network device can better manage and control the application, and therefore the system security can be further improved.

Optionally, the method further includes: The first network device sends a first data channel establishment response to the first terminal device. The first data channel establishment response includes the result indicating whether the first terminal device is allowed to transmit the data of the first application.

In this way, the first terminal device can determine, based on the result, whether to transmit (receive or send) the data of the first application through the IMS. For example, the first terminal device determines whether to initiate the request for establishing the data channel used to transmit the data of the first application.

Optionally, the first data channel establishment response further includes fourth information. The fourth information is used to indicate a second obtaining manner among the plurality of obtaining manners. The second obtaining manner is a manner that is indicated by the first network device and that is used by the first terminal device to obtain the installation file of the first application. The plurality of obtaining manners include at least one of the following manners: the manner of obtaining from the third party, the manner of downloading from the application server of the network in which the first terminal device is located, the manner of downloading from the application server of the network in which the second terminal device is located, and the manner of obtaining from the second terminal device. The second terminal device is the communication peer end of the first terminal device.

The network device delivers the manner of obtaining the installation file of the first application, so that the network device can better manage and control the application, and therefore the system security can be further improved.

In an implementation, the first data channel establishment request is a request used by the first terminal device to request to establish the data channel with the second terminal device.

In this case, optionally, the method further includes: When the first terminal device is not allowed to transmit the data of the first application, the first network device deletes related information of the first application from the first data channel establishment request, and forwards, to the second terminal device, the first data channel establishment request from which the related information of the first application is deleted. The second terminal device is the communication peer end of the first terminal device.

In addition, optionally, the method further includes: When the first terminal device is allowed to transmit the data of the first application, the first network device forwards the first data channel establishment request to the second terminal device. The first data channel establishment request includes fifth information. The fifth information is used to indicate that the first terminal device is allowed to transmit the data of the first application. The fifth information includes the identifier of the first application.

In this way, the second terminal device can determine, based on the result, whether to transmit (receive or send) the data of the first application through the IMS.

In addition, optionally, the first data channel establishment request forwarded by the first network device to the second terminal device includes sixth information. The sixth information is used to indicate a third obtaining manner among a plurality of obtaining manners. The third obtaining manner is a manner that is indicated by the first network device and that is used by the second terminal device to obtain the installation file of the first application. The plurality of obtaining manners include at least one of the following manners: the manner of obtaining from the third party, the manner of downloading from the application server of the network in which the first terminal device is located, the manner of downloading from the application server of the network in which the second terminal device is located, and a manner of obtaining from the first terminal device.

The network device delivers the manner of obtaining the installation file of the first application, so that the network device can better manage and control the application, and therefore the system security can be further improved.

In an implementation, optionally, when the first terminal device is allowed to transmit the data of the first application, the method further includes: The first network device sends the installation file of the first application to the first terminal device and/or the second terminal device. The second terminal device is the communication peer end of the first terminal device.

The installation file of the application is stored in the network device, so that validity and security of the installation file can be ensured, and therefore the system security can be further improved.

In another implementation, the first network device sends seventh information to a second AS. The seventh information is used to indicate the second AS to send the installation file of the first application to the first terminal device and/or the second terminal device. The seventh information includes the identifier of the first terminal device and/or an identifier of the second terminal device and the identifier of the first application. The second AS is configured to store installation files of a plurality of applications including the first application.

The network device configured to store the installation file of the application is independently disposed, so that the network device can be compatible with an existing network device that does not have a function of delivering the installation file, and therefore practicability of this application can be further improved.

Optionally, the method further includes: The first network device obtains eighth information. The eighth information is used to indicate at least one of the following parameters: bandwidth corresponding to the first application (or a bandwidth requirement for transmitting the data of the first application), a type of an access network of the first terminal device, a communication resource corresponding to the first application (or a communication resource expected to be used for transmitting the data of the first application), and a data transmission delay corresponding to the first application (or a transmission delay requirement for transmitting the data of the first application). In addition, that the first network device determines, based on the user data of the first terminal device, whether to allow the first terminal device to transmit the data of the first application includes: The first network device determines, based on the user data of the first terminal device and the eighth information, whether to allow the first terminal device to transmit the data of the first application.

Whether the first terminal device is allowed to transmit the data of the first application is determined based on related information of a transmission condition of the first application, so that reasonableness and reliability of determining can be further improved, and therefore the practicability of this application is improved.

According to a second aspect, an application management method is provided. The method includes: A first terminal device generates first information, where the first information includes an identifier of a first application and an identifier of the first terminal device. The first terminal device sends the first information to a first network device, where the first information is used to determine whether the first terminal device is allowed to transmit data of the first application.

Optionally, the first network device is a call session control function CSCF device.

In this case, the first information is a registration request of an internet protocol multimedia subsystem IMS network.

In addition, the method further includes: The first terminal device receives a registration response from the first network device. The registration response includes a result indicating whether the first terminal device is allowed to transmit the data of the first application.

Optionally, the first network device is a first AS.

In this case, the first information includes a first data channel establishment request.

Optionally, the first data channel establishment request further includes third information. The third information is used to indicate a first obtaining manner among a plurality of obtaining manners. The first obtaining manner is a manner that is requested to be used by the first terminal device to obtain an installation file of the first application. The plurality of obtaining manners include at least one of the following manners: a manner of obtaining from a third party, a manner of downloading from an application server of a network in which the first terminal device is located, a manner of downloading from an application server of a network in which a second terminal device is located, and a manner of obtaining from the second terminal device. The second terminal device is a communication peer end of the first terminal device.

Optionally, the method further includes: The first terminal device receives a first data channel establishment response from the first network device. The first data channel establishment response includes the result indicating whether the first terminal device is allowed to transmit the data of the first application.

Optionally, the first data channel establishment response further includes fourth information. The fourth information is used to indicate a second obtaining manner among the plurality of obtaining manners. The second obtaining manner is a manner that is indicated by the first network device and that is used by the first terminal device to obtain the installation file of the first application. The plurality of obtaining manners include at least one of the following manners: the manner of obtaining from the third party, the manner of downloading from the application server of the network in which the first terminal device is located, the manner of downloading from the application server of the network in which the second terminal device is located, and the manner of obtaining from the second terminal device. The second terminal device is the communication peer end of the first terminal device. In addition, the method further includes: The first terminal device obtains the installation file of the first application based on the second obtaining manner.

Optionally, the method further includes: The first terminal device receives the installation file of the first application from the first network device.

Alternatively, the method further includes: The first terminal device receives the installation file of the first application from a second AS. The second AS is configured to store installation files of a plurality of applications including the first application.

According to a third aspect, an application management method is provided. The method includes: A second terminal device receives a first data channel establishment request from a first terminal device, where the first data channel establishment request includes fifth information, the fifth information is used to indicate that the second terminal device and the first terminal device are allowed to transmit data of a first application, and the fifth information includes an identifier of the first application. The second terminal device transmits the data of the first application with the first terminal device based on the fifth information.

Optionally, the first data channel establishment request includes sixth information. The sixth information is used to indicate a third obtaining manner among a plurality of obtaining manners. The third obtaining manner is a manner that is indicated by a first network device and that is used by the second terminal device to obtain an installation file of the first application. The plurality of obtaining manners include at least one of the following manners: a manner of obtaining from a third party, a manner of downloading from an application server of a network in which the first terminal device is located, a manner of downloading from an application server of a network in which the second terminal device is located, and a manner of obtaining from the first terminal device.

Optionally, the method further includes: The second terminal device receives the installation file of the first application from the first network device.

Alternatively, the method further includes: The second terminal device receives the installation file of the first application from a second AS. The second AS is configured to store installation files of a plurality of applications including the first application.

According to a fourth aspect, an application management method is provided. The method includes: A second application server AS receives seventh information from a first AS, where the seventh information is used to indicate the second AS to send an installation file of a first application to a first terminal device, the seventh information includes an identifier of the first terminal device and an identifier of the first application, and the second AS is configured to store installation files of a plurality of applications including the first application. The second AS sends the installation file of the first application to the first terminal device based on the seventh information.

According to a fifth aspect, an application management apparatus is provided. The apparatus includes modules or units configured to perform the method according to any one of the first aspect to the fourth aspect and the possible implementations of the first aspect to the fourth aspect.

According to a sixth aspect, an application management device is provided. The device includes a processor. The processor is coupled to a memory, and may be configured to perform the method according to any one of the first aspect to the fourth aspect and the possible implementations of the first aspect to the fourth aspect. Optionally, the device further includes the memory. Optionally, the device further includes a communication interface, and the processor is coupled to the communication interface.

In an implementation, the device is a terminal device or a network device. In this case, the communication interface may be a transceiver or an input/output interface.

In another implementation, the device is a chip or a chip system. In this case, the communication interface may be an input/output interface, an interface circuit, an output circuit, an input circuit, a pin, a related circuit, or the like on the chip or the chip system. The processor may alternatively be embodied as a processing circuit or a logic circuit.

According to a seventh aspect, an application management apparatus is provided. The apparatus includes an input circuit, an output circuit, and a processing circuit. The processing circuit is configured to receive a signal through the input circuit, and transmit a signal through the output circuit, so that the method according to any one of the first aspect to the fourth aspect and the possible implementations of the first aspect to the fourth aspect is implemented.

In a specific implementation process, the apparatus may be a chip. The input circuit may be an input pin. The output circuit may be an output pin. The processing circuit may be a transistor, a gate circuit, a trigger, any logic circuit, or the like. An input signal received by the input circuit may be received and input by, for example, but not limited to, a receiver. A signal output by the output circuit may be output to, for example, but not limited to, a transmitter and transmitted by the transmitter. In addition, the input circuit and the output circuit may be different circuits. Alternatively, the input circuit and the output circuit may be a same circuit. In this case, the circuit is used as the input circuit and the output circuit at different moments. Specific implementations of the processor and the various circuits are not limited in this embodiment of this application.

According to an eighth aspect, an application management apparatus is provided. The apparatus includes a processor and a memory. The processor is configured to read instructions stored in the memory, receive a signal through a receiver, and transmit a signal through a transmitter, to perform the method according to any one of the first aspect to the fourth aspect and the possible implementations of the first aspect to the fourth aspect.

Optionally, there are one or more processors, and there are one or more memories.

Optionally, the memory may be integrated with the processor. Alternatively, the memory and the processor are separately disposed.

During specific implementation, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processor in the eighth aspect may be a chip. The processor may be implemented through hardware or software. When the processor is implemented through hardware, the processor may be a logic circuit, an integrated circuit, or the like. When the processor is implemented through software, the processor may be a general-purpose processor, and is implemented by reading software code stored in the memory. The memory may be integrated into the processor, or may exist independently outside the processor.

According to a ninth aspect, a computer program product is provided. The computer program product includes: a computer program (which may also be referred to as code or instructions). When the computer program is run, a computer is enabled to perform the method according to any one of the first aspect to the fourth aspect and the possible implementations of the first aspect to the fourth aspect.

According to a tenth aspect, a computer-readable medium is provided. The computer-readable medium stores a computer program (which may also be referred to as code or instructions). When the computer program is run on a computer, the computer is enabled to perform the method according to any one of the first aspect to the fourth aspect and the possible implementations of the first aspect to the fourth aspect.

### BRIEF DESCRIPTION OF DRAWINGS

FIG. 1 is a schematic diagram of an example of a communication system according to this application;
FIG. 2 is a schematic diagram of an example of an IMS according to this application;
FIG. 3 is a schematic interaction diagram of an example of an application management process according to this application;
FIG. 4 is a schematic interaction diagram of another example of an application management process according to this application;
FIG. 5 is a schematic interaction diagram of still another example of an application management process according to this application;
FIG. 6 is a schematic interaction diagram of still another example of an application management process according to this application;
FIG. 7 is a schematic interaction diagram of still another example of an application management process according to this application;
FIG. 8 is a schematic diagram of an example of an application management apparatus according to this application;
FIG. 9 is a schematic diagram of another example of an application management apparatus according to this application; and
FIG. 10 is a schematic diagram of still another example of an application management apparatus according to this application.

### DESCRIPTION OF EMBODIMENTS

The following describes technical solutions of this application with reference to accompanying drawings.

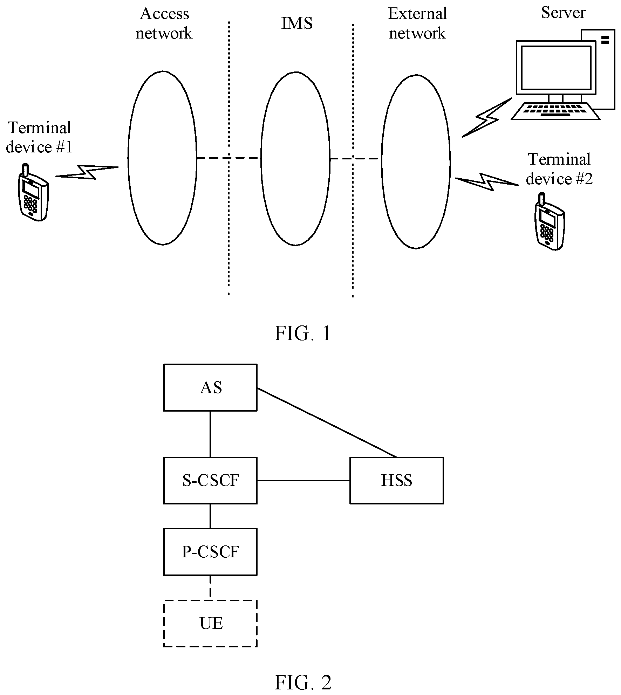

The technical solutions of this application may be applied to various communication systems, for example, an IP multimedia subsystem (Internet Protocol Multimedia Subsystem, IMS), that can complete communication through an access network and a core network. FIG. 1 is a schematic diagram of a structure of a communication system applicable to this application. As shown in FIG. 1, the communication system may include three parts: an access network, an IP multimedia subsystem (IP Multimedia subsystem, IMS), and an external network.

The following separately describes the three parts of the communication system in detail.

### 1. External network

The external network may provide a service for a user. For example, the external network may be the internet (Internet), a public switched telephone network (Public Switched Telephone Network, PSTN), or the like.

In addition, as shown in FIG. 1, a terminal device #1 may access an application or a website through the external network.

Alternatively, the terminal device #1 may communicate with a terminal device #2 through the external network. Although not shown in the figure, a communication system in which the terminal device #2 is located also includes the access network, the IMS, and the external network.

### 2. Access network

The access network may provide a service for a cell, and a terminal device communicates with the access network using a transmission resource (for example, a frequency domain resource or a spectrum resource) used by the cell. By way of example, and not limitation, the access network may be, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunication system (Universal Mobile Telecommunication System, UMTS), a worldwide interoperability for microwave access (Worldwide Interoperability for Microwave Access, WiMAX) communication system, a fifth generation (5th Generation, 5G) system or a new radio (New Radio, NR) system, or a wireless local area network (Wireless Local Area Network, WLAN).

A device that provides the cell in the access network may be referred to as an access network device. The access network device may be an access point (Access Point, AP) in the WLAN, a base transceiver station (Base Transceiver Station, BTS) in the GSM or CDMA, a NodeB (NodeB, NB) in WCDMA, or a gNB in the new radio (New Radio, NR) system. Alternatively, the access network device may be an evolved NodeB (Evolved NodeB, eNB or eNodeB) in LTE, a relay station or an access point, a vehicle-mounted device, a wearable device, an access network device in a 5G network, an access network device in a future evolved PLMN network, or the like.

In addition, the cell provided by the access network may be a cell corresponding to the access network device (for example, a base station). The cell may belong to a macro base station, or may belong to a base station corresponding to a small cell (Small cell). The small cell may include: a metro cell (Metro cell), a micro cell (Micro cell), a pico cell (Pico cell), a femto cell (Femto cell), or the like. These small cells have characteristics of small coverage and low transmit power, and are applicable to providing a high-rate data transmission service.

In addition, a plurality of cells may simultaneously operate in a same frequency band on a carrier in the LTE system or the 5G system. In some special scenarios, it may also be considered that a concept of the carrier is equivalent to that of the cell. For example, in a carrier aggregation (Carrier Aggregation, CA) scenario, when a secondary carrier is configured for UE, both a carrier index of the secondary carrier and a cell identifier (Cell Identity, Cell ID) of a secondary cell operating on the secondary carrier are carried. In this case, it may be considered that the concept of the carrier is equivalent to that of the cell. For example, that the UE accesses a carrier is equivalent to that the UE accesses a cell.

### 3. Terminal device

The terminal device may also be referred to as user equipment (User Equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may be a station (STATION, ST) in the WLAN, a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device with a wireless communication function, a computing device or another processing device connected to a wireless modem, a vehicle-mounted device, a wearable device, a terminal device in a next-generation communication system, for example, the 5G network, or a terminal device in the future evolved public land mobile network (Public Land Mobile Network, PLMN) network.

By way of example, and not limitation, in this embodiment of this application, the terminal device may alternatively be a wearable device. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement all or some functions without depending on smartphones, such as smart watches or smart glasses, and devices that focus on only one type of application function and need to be used with other devices such as smartphones, such as various smart bands or smart jewelry for monitoring physical signs.

In addition, in this embodiment of this application, the terminal device may alternatively be a terminal device in an internet of things (Internet of Things, IoT) system. IoT is an important part in future development of information technologies. A main technical feature of the IoT is to connect a thing to a network by using a communication technology, to implement an intelligent network for human-machine interconnection and thing-thing interconnection.

In this embodiment of this application, an IoT technology may implement massive connections, deep coverage, and terminal power saving by using, for example, a narrowband (Narrow Band) NB technology. For example, an NB includes only one resource block (Resource Block, RB). To be specific, bandwidth of the NB is only 180 KB. To implement massive access, terminals need to be discrete in access. According to a communication method in embodiments of this application, a congestion problem that occurs in the IoT technology when massive terminals access a network through the NB can be effectively resolved.

### 4. IMS

The IMS may also be referred to as a core network, and is configured to transmit data from the access network to the external network, or transmit data from the external network to the access network. More specifically, the IMS is a universal network architecture that provides a multimedia service on an IP-based network.

By way of example, and not limitation, as shown in FIG. 2, the IMS may include but is not limited to the following network elements.

### A. Gateway (Gateway, GW) device

The gateway device is a transit device for data exchange between the terminal device in the access network and the external network.

By way of example, and not limitation, in this application, the terminal device and the gateway device may communicate with each other based on routing information.

By way of example, and not limitation, the routing information may include an IP address or a port.

Specifically, for example, when the terminal device #1 needs to send a data packet #1 to the external network, the terminal device #1 may include routing information #1 in a destination address field of the data packet #1. The routing information #1 is terminal device #1-oriented routing information (for example, an IP address or a port) of a gateway device (which is denoted as a gateway device #1) serving the terminal device #1.

The "terminal device #1-oriented routing information of the gateway device #1" may refer to routing information that can indicate the gateway device #1.

Optionally, the "terminal device #1-oriented routing information of the gateway device #1" may specifically refer to routing information that enables the terminal device #1 to identify the gateway device #1. Specifically, the gateway device #1 may have a plurality of pieces of routing information. In addition, each piece of routing information can indicate the gateway device #1. In this application, the plurality of pieces of routing information may be separately oriented to different terminal devices. In other words, different terminal devices may obtain different routing information used to indicate the gateway device #1.

In addition, the terminal device #1 may include routing information #2 in a source address field of the data packet #1. The routing information #2 is gateway device #1-oriented routing information (for example, an IP address or a port) of the terminal device #1.

The "gateway device #1-oriented routing information of the terminal device #1" may refer to routing information that can indicate the terminal device #1.

Optionally, the "gateway device #1-oriented routing information of the terminal device #1" may specifically refer to routing information that enables the gateway device #1 to identify the terminal device #1. Specifically, the terminal device #1 may have a plurality of pieces of routing information. In addition, each piece of routing information can indicate the terminal device #1. In this application, the plurality of pieces of routing information may be separately oriented to different gateway devices. In other words, different gateway devices may obtain different routing information used to indicate the terminal device #1.

Alternatively, the terminal device #1 may have a plurality of pieces of routing information. For example, different services (or sessions) of the terminal device #1 use different routing information. In addition, each piece of routing information can indicate the terminal device #1.

Therefore, a device in the communication system can route the data packet #1 to the gateway device #1 based on the routing information (namely, the routing information #1) carried in the destination address field of the data packet #1.

In addition, the gateway device #1 may identify that the data packet #1 is from the terminal device #1 based on the routing information (namely, the routing information #2) carried in the source address field of the data packet #1. Optionally, the gateway device #1 may further identify a service (or a session) corresponding to the data packet #1 based on the routing information #2.

Therefore, the gateway device may send the data packet #1 to an external device based on related information (for example, information of an accessed service) of the terminal device #1.

For another example, when receiving a data packet #2 from the external device, the gateway device #1 may determine, for example, based on information such as a bearer corresponding to the data packet #2 and the like, that the data packet #2 needs to be sent to the terminal device #1. In this way, the gateway device #1 may include the routing information #2 in a destination address field of the data packet #2.

In addition, the gateway device #1 may include the routing information #1 in a source address field of the data packet #2.

Therefore, the device in the communication system can route the data packet #2 to the terminal device #1 based on the routing information (namely, the routing information #2) carried in the destination address field of the data packet #2.

In addition, the terminal device #1 may identify that the data packet #2 is from the gateway device #1 based on the routing information (namely, the routing information #1) carried in the source address field of the data packet #2. Optionally, the terminal device #1 may further identify a service (or a session) corresponding to the data packet #2 based on the routing information #2.

In this embodiment of this application, the IMS system may include a plurality of gateway devices. In addition, different gateway devices may have different coverage.

By way of example, and not limitation, the gateway device may be various gateway devices such as a translation gateway (Translation Gateway, TrGW) or an IMS access gateway (Access Gateway, AGW).

### B. Call session control function (Call Session Control Function, CSCF) device

The CSCF device is a functional entity in the IMS, and is a core of the entire IMS. The CSCF device is mainly responsible for processing signaling control in a multimedia call session process. The CSCF device manages user authentication of the IMS and QoS of a bearer plane of the IMS, and cooperates with another network element to perform control on a session initiation protocol (Session Initiation Protocol, SIP) session, service negotiation, resource allocation, and the like.

The CSCF device may communicate with the terminal device. In addition, the CSCF device may communicate with the gateway device.

For example, the CSCF device may select the gateway device that communicates with the terminal device. In addition, the CSCF device may allocate routing information, for example, an IP address or a port, to the terminal device and the gateway device.

By way of example, and not limitation, the CSCF is classified into a proxy CSCF (Proxy CSCF, P-CSCF), an interrogating CSCF (Interrogating CSCF, I-CSCF), a serving CSCF (Serving CSCF, S-CSCF), and the like based on functions.

The P-CSCF is a unified entry point of a visited network (an example of the access network) of the IMS. All session messages initiated from the user equipment and terminated on the user equipment need to pass through the P-CSCF. As a SIP proxy, the P-CSCF is responsible for user authentication and internet protocol security (Internet Protocol Security, IPsec) management related to the access network, network attack defense and security protection, SIP signaling compression and decompression that aim to save wireless network resources, user roaming control, network address translation (Network Address Translation, NAT) and QoS management on the bearer plane using a policy decision function (Policy Decision Function, PDF), and the like. For example, the P-CSCF may determine an I-CSCF based on a domain name provided by the user equipment, and forward a SIP registration request from the user equipment to the I-CSCF. For another example, the P-CSCF may forward a SIP message from the user equipment to the S-CSCF determined when the user equipment initiates a registration process.

The I-CSCF is an entry point of a home network (another example of the access network) of the IMS. During a registration process, the I-CSCF selects an S-CSCF for the user by querying an HSS. During a call process, a call to an IMS network is first routed to the I-CSCF. The I-CSCF obtains, from the HSS, an address of the S-CSCF with which the user registers, and routes a message to the S-CSCF. For example, the I-CSCF may specify an S-CSCF to perform SIP registration for the user equipment. For another example, the I-CSCF may obtain the address of the S-CSCF from the HSS, and forward a SIP request, or route a SIP request transmitted from another network to the S-CSCF.

The S-CSCF is a core of session control in the IMS network. The S-CSCF receives the registration request forwarded from the visited network through the P-CSCF and cooperates with the HSS to perform user authentication. In addition, the S-CSCF downloads, from the HSS, service data subscribed to by the user. The S-CSCF performs route management on user calling and called sides, and triggers a SIP application server (Application Server, AS) according to an initial filter criteria (Initial Filter Criteria, IFC) subscribed to by the user, to implement diverse IMS service functions. For example, after receiving the registration request, the S-CSCF may make the registration request effective through the HSS. For another example, the S-CSCF may control a registered session terminal, and may be used as a proxy server (Proxy-Server). For another example, after receiving the request, the S-CSCF may perform internal processing or forward the request, and may be used as a user agent (User Agent, UA) to interrupt or initiate a SIP transaction. For another example, the S-CSCF may further interact with a service platform to provide a multimedia service.

It should be noted that the P-CSCF, S-CSCF, and I-CSCF may be independently configured in different entities, or may be integrated into a same entity. For ease of understanding and description below, the P-CSCF, the S-CSCF, and the I-CSCF are collectively referred to as the CSCF device.

### C. Home subscriber server (Home Subscriber Server, HSS)

The HSS is used as a database for storing user information in the IMS, and is used to store user data. In this application, the user data may include information of an authorized application (for example, an identifier of the application) and/or information of an unauthorized application that are/is of the user.

The authorized application of the user may be understood as an application whose data is allowed to be transmitted by the user (or a terminal device of the user) through the IMS.

The unauthorized application of the user may be understood as an application whose data is prohibited from being transmitted by the user (or a terminal device of the user) through the IMS.

For example, Table 1 below shows an example of the user data stored in the HSS.

**Table 1**

| Identifier of a terminal device | Identifier of an authorized application |
|---|---|
| Identifier 1 | Identifier a, identifier b, identifier c, ... |
| Identifier 2 | Identifier b, identifier d, identifier n, ... |
| ... | ... |
| Identifier N | Identifier c, identifier p, identifier t, ... |

For another example, Table 2 below shows an example of the user data stored in the HSS.

**Table 2**

| Identifier of a terminal device | Identifier of an unauthorized application |
|---|---|
| Identifier 1 | Identifier d, identifier e, identifier f, ... |
| Identifier 2 | Identifier c, identifier e, identifier m, ... |
| ... | ... |
| Identifier N | Identifier d, identifier q, identifier s, ... |

For another example, Table 3 below shows an example of the user data stored in the HSS.

**Table 3**

| Identifier of a terminal device | Identifier of an authorized application | Identifier of an unauthorized application |
|---|---|---|
| Identifier 1 | Identifier a, identifier b, identifier c, ... | Identifier d, identifier e, identifier f, ... |
| Identifier 2 | Identifier b, identifier d, identifier n, ... | Identifier c, identifier e, identifier m, ... |
| ... | ... | ... |
| Identifier N | Identifier c, identifier p, identifier t, ... | Identifier d, identifier q, identifier s, ... |

It should be understood that the user data listed above is merely an example for description. This application is not limited thereto. For example, the user data may further include but is not limited to one or more of the following information:
user authentication information, specific subscriber information, dynamic subscriber information, and network policy rule and device identifier register information, which are used for mobility management and user service data management.

In addition, in this application, the HSS may be a logical entity, and may physically include a plurality of physical databases. This is not particularly limited in this application.

### D. Application server (Application Server, AS)

The AS is an application layer device at the top layer of the IMS system. The AS provides basic and supplementary services and services such as a multimedia conference, converged communication, a short message service gateway, and a standard attendant console. The IMS network is an IP bearer-based open system that provides various multimedia services for the user. The AS interacts with the CSCF to trigger and execute various network services. In addition, the terminal device is communicatively connected to the AS. The AS may establish a data channel for the terminal device.

Specifically, the application server AS in the IMS network provides the following service applications:

### Basic and supplementary services

Basic services in the IMS network include a point-to-point voice call, a video call, and a call exception prompt. The point-to-point call may be made between two IMS users or between an IMS user and a user in another network, such as a PSTN fixed-line phone user or a mobile network GSM user. The call exception prompt refers to playing of a notification sound for a calling user in a voice or video call under various conditions, for example, a called party is busy or does not answer the call, a called number does not exist, or a calling party is out of credit. Supplementary services provided by the IMS network include services such as number presentation, call transfer, call barring, call completion, and a multi-party call.

### Multimedia conference

The multi-party call is a network application established between at least three users, where a voice of any person can be heard by all other persons in the conference. The multimedia conference provides a video image on the basis of transmitting voice information in the multi-party call. In this way, media types for interaction between persons are richer.

### Converged communication

The converged communication provides various communication modes and services for the user on the Internet, such as a message, a file, and video sharing.

It should be understood that the listed devices included in the IMS are merely examples for description. This application is not limited thereto. For example, the IMS may further include devices such as a service centralization and continuity application server (Service Centralization and Continuity Application Server, SCC AS), an access transfer control function (Access Transfer Control Function, ATCF) device, and a policy decision function (Policy Decision Function, PDF) device.

In embodiments of this application, a communication device (for example, the terminal device, the CSCF device, or the AS device) includes a hardware layer, an operating system layer running above the hardware layer, and an application layer running above the operating system layer. The hardware layer includes hardware such as a central processing unit (Central Processing Unit, CPU), a memory management unit (Memory Management Unit, MMU), and a memory (which is also referred to as a main memory). An operating system may be any one or more computer operating systems that implement service processing through a process (Process), such as a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be a terminal device or a network device, or a functional module that is in the terminal device or the network device and that can invoke and execute the program.

In addition, aspects or features in embodiments of this application may be implemented as a method, an apparatus or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (Compact Disc, CD) or a digital versatile disc (Digital Versatile Disc, DVD)), or a smart card and a flash memory component (for example, an erasable programmable read-only memory (Erasable Programmable Read-Only Memory, EPROM), a card, a stick, or a key drive). In addition, various storage media described in this specification may represent one or more devices and/or other machine-readable media that are configured to store information. The term "machine-readable media" may include but is not limited to a wireless channel, and various other media that can store, include and/or carry instructions and/or data.

It should be noted that in embodiments of this application, a plurality of application programs may be run at the application layer. In this case, an application program for performing the communication method in embodiments of this application and an application program used to control a receive end device to implement an action corresponding to received data may be different application programs.

An application management method provided in this application may be performed in a registration process of a terminal device (which is a manner 1), or may be performed in a process in which the terminal device initiates establishment of a data channel (which is a manner 2). The following separately describes in detail specific processes of the two manners.

### Manner 1

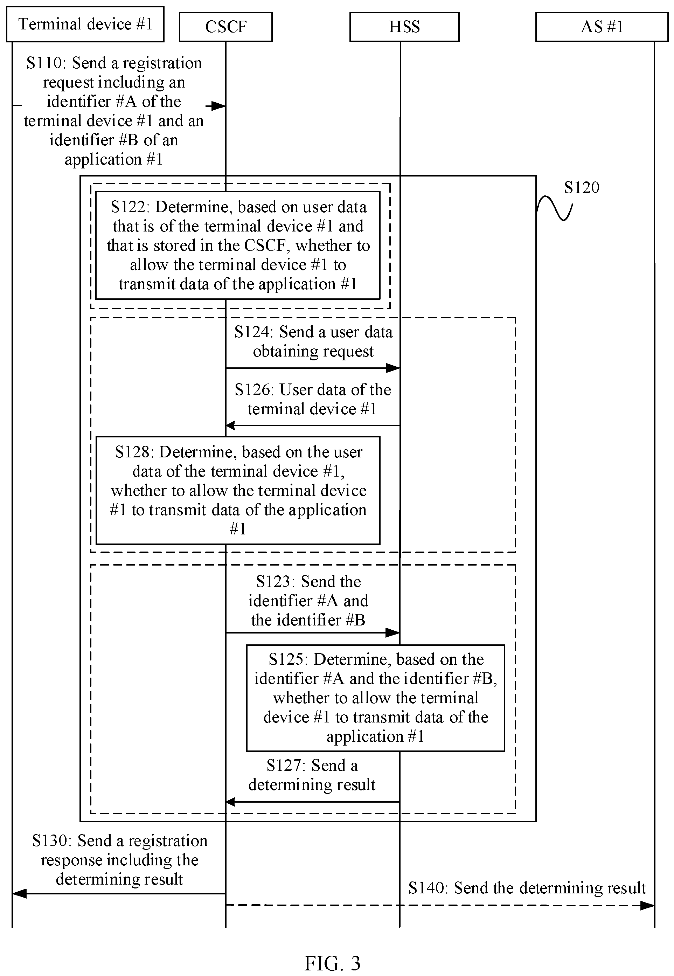

FIG. 3 shows an example of the registration process. As shown in FIG. 3, a terminal device #1 generates a registration request, and the registration request may be used by the terminal device #1 to initiate the registration process to an IMS.

In this application, the registration request includes an identifier (which is denoted as an identifier #A) of the terminal device #1. In addition, the registration request includes an identifier of at least one application (namely, an example of a first application).

In this application, a processing process of each of the at least one application is similar. For ease of understanding and description, a processing process of one application thereof (which is denoted as an application #1) is used as an example for description.

The application #1 may be an application, for example, a 5G application such as a remote control application, a medical care application, or a conference application, used by the terminal device #1 and a terminal device #2 in a process of a video or voice call performed through the IMS.

By way of example, and not limitation, the application #1 may be determined (or set) by a user (which is denoted as a user #1) of the terminal device #1. Alternatively, the application #1 may be determined by a manufacturer of the terminal device #1. Alternatively, the application #1 may be determined by an operator to which the user #1 subscribes. This is not particularly limited in this application.

In addition, the application #1 may be an application that has been installed on the terminal device #1. Alternatively, the application #1 may be an application that has not been installed on the terminal device #1. This is not particularly limited in this application.

Moreover, in addition to carrying an identifier (which is denoted as an identifier #B) of the application #1, the registration request in this application may further include information included in a registration request in a conventional technology. In addition, a format and a function of the registration request in this application may be similar to those of the registration request in the conventional technology. To avoid repetition, detailed descriptions thereof are omitted herein.

In S110, the terminal device #1 may send the generated registration request to a CSCF (for example, a P-CSCF).

In S120, the CSCF (for example, an S-CSCF) receives the registration request, and obtains the identifier #A and the identifier #B from the registration request.

Then, the CSCF performs determining (which is denoted as determining #1) based on the identifier #A and the identifier #B. The determining 1 is to determine whether the terminal device (namely, the terminal device #1) indicated by the identifier #A is allowed to transmit, through the IMS, data of the application (namely, the application #1) indicated by the identifier #B, to obtain a determining result (which is denoted as a determining result #A).

In a possible implementation, the CSCF may store an application permission list (namely, an example of user data).

For example, the application permission list is used to indicate an authorized application and/or an unauthorized application of each terminal device among a plurality of terminal devices. For example, the application permission list includes an identifier of the authorized application and/or an identifier of the unauthorized application that correspond/corresponds to an identifier of each terminal device. For example, the application permission list may be any entry in Table 1 to Table 3 above.

In this case, in S122, the CSCF may determine, based on the application permission list (for example, Table 1 or Table 3), whether the identifier #B (or the application #1 indicated by the identifier #B) belongs to an identifier of an authorized application corresponding to the identifier #A (or the terminal device indicated by the identifier #A).

If it is determined that the identifier #B (or the application #1 indicated by the identifier #B) belongs to the identifier of the authorized application corresponding to the identifier #A (or the terminal device indicated by the identifier #A), the CSCF may determine to allow the terminal device (namely, the terminal device #1) indicated by the identifier #A to transmit, through the IMS, the data of the application (namely, the application #1) indicated by the identifier #B. For ease of understanding and description below, a result is denoted as a result #1, which is a possible result of the determining result #A.

If it is determined that the identifier #B (or the application #1 indicated by the identifier #B) does not belong to the identifier of the authorized application corresponding to the identifier #A (or the terminal device indicated by the identifier #A), the CSCF may determine to prohibit the terminal device (namely, the terminal device #1) indicated by the identifier #A from transmitting, through the IMS, the data of the application (namely, the application #1) indicated by the identifier #B. For ease of understanding and description below, a result is denoted as a result #2, which is another possible result of the determining result #A.

Alternatively, the CSCF may determine, based on the application permission list (for example, Table 2 or Table 3), whether the identifier #B (or the application #1 indicated by the identifier #B) belongs to an identifier of an unauthorized application corresponding to the identifier #A (or the terminal device indicated by the identifier #A).

If it is determined that the identifier #B (or the application #1 indicated by the identifier #B) belongs to the identifier of the unauthorized application corresponding to the identifier #A (or the terminal device indicated by the identifier #A), the CSCF may determine to prohibit the terminal device (namely, the terminal device #1) indicated by the identifier #A from transmitting, through the IMS, the data of the application (namely, the application #1) indicated by the identifier #B, that is, the result #2.

It should be understood that the listed processes of obtaining the determining result #A are merely examples for description. This application is not limited thereto. For example, the result #A may alternatively be obtained based on at least one of the following parameters.

A parameter #A indicates whether the IMS supports the application #1.

Specifically, if the IMS supports the application #1, and the identifier #B (or the application #1 indicated by the identifier #B) belongs to the identifier of the authorized application corresponding to the identifier #A (or the terminal device #1 indicated by the identifier #A), it may be determined that the result #A is that the terminal device (namely, the terminal device #1) indicated by the identifier #A is allowed to transmit, through the IMS, the data of the application (namely, the application #1) indicated by the identifier #B, that is, the result #1.

If the IMS does not support the application #1, it may be determined that the result #A is that the terminal device (namely, the terminal device #1) indicated by the identifier #A is prohibited from transmitting, through the IMS, the data of the application (namely, the application #1) indicated by the identifier #B, that is, the result #2.

A parameter #B indicates a bandwidth requirement of the application #1.

Specifically, if bandwidth of the IMS (or bandwidth that can be provided for the terminal device #1) can meet the bandwidth requirement of the application #1, and the identifier #B (or the application #1 indicated by the identifier #B) belongs to the identifier of the authorized application corresponding to the identifier #A (or the terminal device #1 indicated by the identifier #A), it may be determined that the result #A is that the terminal device (namely, the terminal device #1) indicated by the identifier #A is allowed to transmit, through the IMS, the data of the application (namely, the application #1) indicated by the identifier #B, that is, the result #1.

If the bandwidth of the IMS (or the bandwidth that can be provided for the terminal device #1) does not meet the bandwidth requirement of the application #1, it may be determined that the result #A is that the terminal device (namely, the terminal device #1) indicated by the identifier #A is prohibited from transmitting, through the IMS, the data of the application (namely, the application #1) indicated by the identifier #B, that is, the result #2.

A parameter #C indicates a type of an access network of the terminal device #1.

Specifically, if the type (for example, a 4G network or a 5G network) of the access network of the terminal device #1 can meet a requirement (for example, a transmission rate requirement or a transmission delay requirement) of the application #1, and the identifier #B (or the application #1 indicated by the identifier #B) belongs to the identifier of the authorized application corresponding to the identifier #A (or the terminal device #1 indicated by the identifier #A), it may be determined that the result #A is that the terminal device (namely, the terminal device #1) indicated by the identifier #A is allowed to transmit, through the IMS, the data of the application (namely, the application #1) indicated by the identifier #B, that is, the result #1.

If the type (for example, a 4G network or a 5G network) of the access network of the terminal device #1 does not meet the requirement of the application #1, it may be determined that the result #A is that the terminal device (namely, the terminal device #1) indicated by the identifier #A is prohibited from transmitting, through the IMS, the data of the application (namely, the application #1) indicated by the identifier #B, that is, the result #2.

A parameter #D indicates a communication resource corresponding to the terminal device #1 (or the application #1).

Specifically, if the resource allocated by the IMS to the terminal device #1 (or the application #1) can meet the requirement (for example, the transmission rate requirement or the transmission delay requirement) of the application #1, and the identifier #B (or the application #1 indicated by the identifier #B) belongs to the identifier of the authorized application corresponding to the identifier #A (or the terminal device #1 indicated by the identifier #A), it may be determined that the result #A is that the terminal device (namely, the terminal device #1) indicated by the identifier #A is allowed to transmit, through the IMS, the data of the application (namely, the application #1) indicated by the identifier #B, that is, the result #1.

If the resource allocated by the IMS to the terminal device #1 (or the application #1) does not meet the requirement (for example, the transmission rate requirement or the transmission delay requirement) of the application #1, it may be determined that the result #A is that the terminal device (namely, the terminal device #1) indicated by the identifier #A is prohibited from transmitting, through the IMS, the data of the application (namely, the application #1) indicated by the identifier #B, that is, the result #2.

In another possible implementation, the CSCF does not store the application permission list, but an HSS stores the application permission list.

In this case, the determining may be performed in any one of the following manners.

### Manner a

Optionally, in S124, the CSCF sends a user data obtaining request to the HSS, where the user data obtaining request carries the identifier #A.

In S126, the HSS determines the application permission list, for example, an authorized application list and/or an unauthorized application list, corresponding to the identifier #A (or the terminal device #1 indicated by the identifier #A) based on the identifier #A, and sends the application permission list to the CSCF.

In S128, the CSCF may determine, based on the application permission list, whether the identifier #B (or the application #1 indicated by the identifier #B) indicates (or is) an authorized application or an unauthorized application, to obtain the result #1 or the result #2. In addition, a process of S128 may be similar to the process of S122. To avoid repetition, detailed descriptions thereof are omitted herein.

### Manner b

Optionally, in S123, the CSCF sends a user data obtaining request to the HSS, where the user data obtaining request carries the identifier #A and the identifier #B.

In S125, the HSS determines the application permission list corresponding to the identifier #A (or the terminal device #1 indicated by the identifier #A), and determines, based on the identifier #B and the application permission list, whether the identifier #B (or the application #1 indicated by the identifier #B) indicates (or is) an authorized application or an unauthorized application, to obtain the result #1 or the result #2. In addition, a process of S125 may be similar to the process of S122. To avoid repetition, detailed descriptions thereof are omitted herein.

In S127, the HSS may send the determining result (which is the result #1 or the result #2) to the CSCF.

To be specific, after the foregoing processing, the CSCF can obtain the determining result, namely, the result #A, indicating whether the terminal device #1 is allowed to transmit the data of the application #1 through the IMS.

Then, the CSCF generates a registration response for the registration request.

In this application, the registration response includes the result #A.

For example, the registration response may include a correspondence between the identifier #B and the result #A.

Specifically, when the registration request includes identifiers of a plurality of applications, determining results of different applications may be different. A correspondence between an identifier of each application and a determining result corresponding to each application is carried in the registration response, so that the terminal device can reliably determine the determining result of each application (namely, a result indicating whether the terminal device is allowed to transmit data of the application through the IMS).

Moreover, in addition to carrying the determining result (for example, the result #A) of each application, the registration response in this application may further include information included in a registration response in the conventional technology. In addition, a format and a function of the registration response in this application may be similar to those of the registration response in the conventional technology. Furthermore, in addition to the determining recorded in S120, the CSCF may further perform processes such as registration, authorization, and authentication in the conventional technology based on the registration request. To avoid repetition, detailed descriptions thereof are omitted.

In addition, in S130, the CSCF sends the generated registration response to the terminal device #1.

Therefore, the terminal device #1 may determine, based on the result #A corresponding to the identifier #B, whether the data of the application #1 indicated by the identifier #B can be transmitted through the IMS.

Optionally, in S140, the CSCF may further send the result #A (which is specifically a correspondence between the identifier #B, the identifier #A, and the result #A) to an AS (which is denoted as an AS #1) configured to control establishment of a data channel of the terminal device. Therefore, when receiving a data channel establishment request that is sent by the terminal device #1 and that carries the identifier #A and the identifier #B, the AS #1 may determine, based on the correspondence, whether the terminal device #1 indicated by the identifier #A is allowed to establish a data channel used to transmit the data of the application #1 indicated by the identifier #B.

For example, if the result #A is the result #1, the data channel used to transmit the data of the application #1 of the terminal device #1 is allowed to be established.

If the result #A is the result #2, the data channel used to transmit the data of the application #1 of the terminal device #1 is prohibited from being established.

### Manner 2

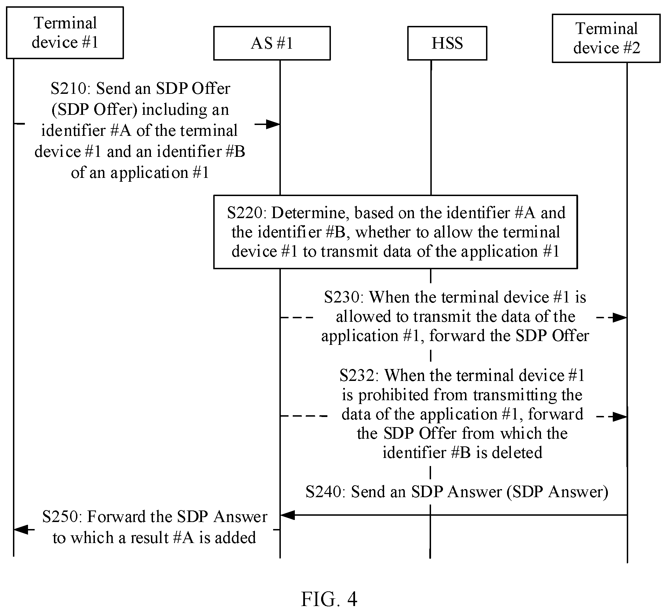

FIG. 4 shows an example of the process of establishing a data channel. As shown in FIG. 4, a terminal device #1 generates a data channel establishment request, for example, a session description protocol offer (Session Description Protocol Offer, SDP Offer).

The SDP Offer may be used by the terminal device #1 to initiate a process of establishing a data channel #A.

In an implementation, the data channel #A may be a channel that is requested to be established by the terminal device #1 and that is used to transmit data of an application #2 (for example, a voice or video call).

In another implementation, the data channel #A may be a channel that is requested to be established by the terminal device #1 and that is used to transmit data of an application #1.

In addition, the SDP Offer may be used by the terminal device #1 to initiate a process of establishing a data channel with a terminal device #2.

Alternatively, the SDP Offer may be used by the terminal device #1 to initiate a process of establishing a data channel with another external server (for example, a server of the application #1).

In this application, the SDP Offer includes an identifier (namely, an identifier #A) of the terminal device #1. In addition, the SDP Offer includes an identifier of at least one application (namely, an example of a first application).

It should be noted that the SDP Offer may be carried in a session initiation protocol (Session Initiation Protocol, SIP) message, for example, an invite (Invite) message, an update (Update) message, or a re-invite (Re-invite) message.

In addition, "the SDP Offer includes an identifier of the terminal device #1" may be understood as: The SIP message that carries the SDP Offer includes the identifier of the terminal device #1.

In other words, the identifier of the terminal device #1 may be carried in the SDP Offer, or may be carried in the SIP message in which the SDP Offer is carried.

Similarly, in addition, "the SDP Offer includes an identifier of at least one application" may be understood as: The SIP message that carries the SDP Offer includes the identifier of the at least one application.

In other words, the identifier of the at least one application may be carried in the SDP Offer, or may be carried in the SIP message in which the SDP Offer is carried.

Similarly, a processing process of the application #1 is used as an example for description.

By way of example, and not limitation, the application #1 may be determined (or set) by a user (which is denoted as a user #1) of the terminal device #1. Alternatively, the application #1 may be determined by a manufacturer of the terminal device #1. Alternatively, the application #1 may be determined by an operator to which the user #1 subscribes. This is not particularly limited in this application.

In addition, the application #1 may be an application that has been installed on the terminal device #1. Alternatively, the application #1 may be an application that has not been installed on the terminal device #1. This is not particularly limited in this application.

Moreover, in addition to carrying an identifier (namely, an identifier #B) of the application #1, the SDP Offer in this application may further include information included in an SDP Offer in a conventional technology. In addition, a format and a function of the SDP Offer in this application may be similar to those of the SDP Offer in the conventional technology. To avoid repetition, detailed descriptions thereof are omitted herein.

In S210, the terminal device #1 may send the generated SDP Offer to an AS, namely, an AS #1, that is in an IMS and that is configured to manage a data channel.

In S220, the AS #1 receives the SDP Offer, and obtains the identifier #A and the identifier #B from the SDP Offer.

Then, the AS #1 performs determining, namely, determining #1, based on the identifier #A and the identifier #B, and obtains a determining result #A.

A specific process of the determining #1 is similar to the process of the determining #1 performed by the CSCF in S120. To avoid repetition, detailed descriptions thereof are omitted herein.

Then, the AS #1 forwards the SDP Offer to the terminal device #2 (or the server of the application #1) based on the determining result #A.

For example, when the SDP Offer is an SDP Offer sent by the terminal device #1 to the terminal device #2 through the AS #1, if the result #A is that the terminal device #1 is allowed to transmit the data of the application #1 through the IMS (that is, a result #1), in S230, the AS #1 may add information about the result #A, for example, a correspondence between the result #A, the identifier #A, and the identifier #B, to the SDP Offer. Therefore, the terminal device #2 may determine, based on the SDP Offer (which is specifically the correspondence between the result #A, the identifier #A, and the identifier #B), that the data of the application (namely, the application #1) indicated by the identifier #B can be transmitted, through the IMS, to the terminal device (namely, the terminal device #1) indicated by the identifier #A. Alternatively, in S230, the AS #1 may reserve the identifier #B in the SDP Offer. Therefore, the terminal device #2 may determine that the terminal device #1 indicated by the identifier #A carried in the SDP Offer (or the SIP message carrying the SDP Offer) is allowed to transmit, through the IMS, the data of the application (namely, the application #1) indicated by the identifier #B with the terminal device #2.

For another example, when the SDP Offer is an SDP Offer sent by the terminal device #1 to the terminal device #2 through the AS #1, if the result #A is that the terminal device #1 is prohibited from transmitting the data of the application #1 through the IMS (that is, a result #2), in S232, the AS #1 may delete the identifier #B from the SDP Offer. In this case, the terminal device #2 determines that the data of the application corresponding to the identifier (for example, the identifier #B) that is not carried in the SDP Offer (or the SIP message carrying the SDP Offer) is prohibited from being transmitted through the IMS. In other words, because the SDP Offer does not carry the identifier #B, the terminal device #2 may determine that the data of the application indicated by the identifier #B is not allowed to be transmitted.

For another example, when the SDP Offer is an SDP Offer sent by the terminal device #1 to the server of the application #1 through the AS #1, if the result #A is that the terminal device #1 is allowed to transmit the data of the application #1 through the IMS (that is, the result #1), the AS #1 may forward the SDP Offer to the server of the application #1; if the result #A is that the terminal device #1 is prohibited from transmitting the data of the application #1 through the IMS (that is, the result #2), the AS #1 may reject the SDP Offer.

In S240, the AS #1 receives an SDP Answer (Answer) from the terminal device #2 (or the server of the application #1), and forwards the SDP Answer (Answer) to the terminal device #1. The SDP Answer includes the identifier of the terminal device #1.

Information, a format, and a function included in the SDP Answer may be similar to those in the conventional technology. To avoid repetition, detailed descriptions thereof are omitted herein.

In addition, in S250, the AS #1 adds the result #A to the SDP Answer, and sends, to the terminal device #1, the SDP Answer to which the result #A is added.

For example, if the result #A is the result #1 (which indicates that the terminal device #1 is allowed to transmit the data of the application #1 through the IMS), the AS #1 adds the identifier #B to the SDP Answer, and sends, to the terminal device #1, the SDP Answer to which the identifier #B is added.

In this case, the terminal device #1 determines that the data of the application (for example, the application #1) indicated by the identifier (for example, the identifier #B) carried in the SDP Answer is allowed to be transmitted through the IMS.

It should be noted that the SDP Answer may be carried in a SIP message, for example, an invite message, an update message, or a re-invite message.

In addition, "the SDP Answer includes the identifier of the terminal device #1" may be understood as: The SIP message that carries the SDP Answer includes the identifier of the terminal device #1.

In other words, the identifier of the terminal device #1 may be carried in the SDP Answer, or may be carried in the SIP message in which the SDP Answer is carried.

Similarly, "the SDP Answer includes the identifier #B" may be understood as: The SIP message that carries the SDP Answer includes the identifier #B.

In other words, the identifier #B may be carried in the SDP Answer, or may be carried in the SIP message in which the SDP Answer is carried.

Therefore, the terminal device #1 may determine, based on the result #A corresponding to the identifier #B, whether the data of the application #1 indicated by the identifier #B can be transmitted through the IMS.

In addition, although not shown in the figure, the AS #1 may further establish the data channel #A for the terminal device #1 and the terminal device #2 (or the server of the application #1).

When the data channel #A is the channel that is requested to be established by the terminal device #1 and that is used to transmit the data of the application #2 (for example, a voice or video call), if the result #A is that the terminal device #1 is allowed to transmit the data of the application #1 through the IMS, the AS #1 may further establish a data channel #B for the terminal device #1 and the terminal device #2, where the data channel #B is used to transmit the data of the application #1.

It should be noted that the processes shown in the manner 1 and the manner 2 may be used separately or in combination. To be specific, when the terminal device performs registration, determining of whether the data of the application requested by the terminal device is allowed to be transmitted through the IMS may be performed. In addition, when the terminal device initiates the data channel establishment request, the determining of whether the data of the application requested by the terminal device is allowed to be transmitted through the IMS is performed again.

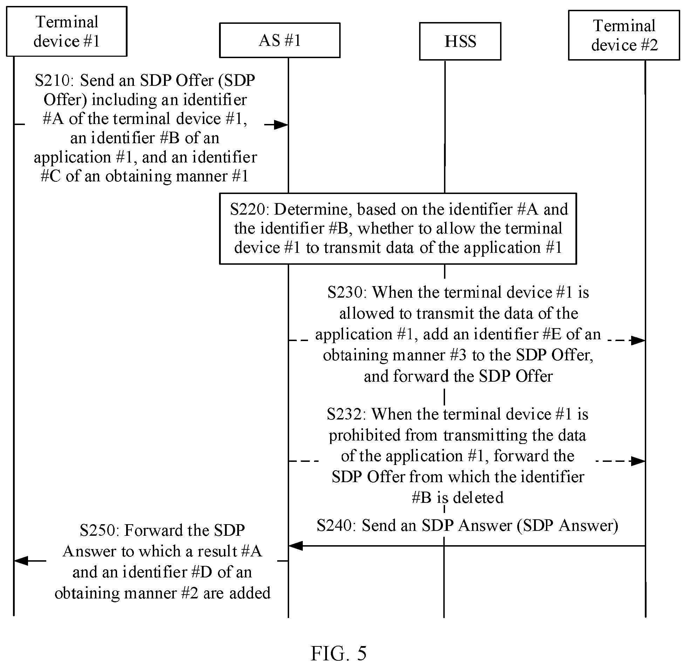

FIG. 5 shows another example of the process of establishing a data channel. Different from the process shown in FIG. 4, the SDP Offer further carries an identifier #C. The identifier #C is used to indicate, among a plurality of obtaining manners, a manner (namely, an example of a first manner, which is denoted as an obtaining manner #1) that is requested to be used by the terminal device #1. The identifier #C is an identifier of the obtaining manner #1.

The obtaining manner #1 is a manner that is requested by the terminal device #1 to obtain an installation file of the application #1. Specifically, as described above, because the SDP Offer carries the identifier (namely, the identifier #A) of the terminal device #1 and the identifier (namely, the identifier #B) of the application #1, the AS #1 can determine, with reference to the identifier #C, that the manner indicated by the identifier #C is the manner that is requested by the terminal device #1 to obtain the installation file of the application #1.

By way of example, and not limitation, the plurality of obtaining manners include but are not limited to at least one of the following obtaining manners. In other words, the obtaining manner may be one of the following obtaining manners:
Obtaining manner A: Download from a third party. To be specific, the terminal device itself obtains the installation file. For example, the terminal device (or the user of the terminal device) itself downloads the installation file from an application store or a website.
Obtaining manner B: Download from the AS of the IMS in which the terminal device is currently located.
Obtaining manner C: Download from an AS of an IMS in which another terminal (namely, a receive end of the SDP Offer) communicating with the local terminal device (namely, a transmit end of the SDP Offer) is located.
Obtaining manner D: Download from the another terminal (namely, the receive end of the SDP Offer) communicating with the local terminal device (namely, the transmit end of the SDP Offer).

In addition, the AS #1 determines whether to allow a terminal device #A to obtain the installation file of the application #1 in the obtaining manner (namely, the obtaining manner #1) indicated by the identifier #C. A determining rule and a determining basis of a determining process may be randomly set by the user based on an actual situation. This is not particularly limited in this application.

In addition, the AS #1 adds an identifier #D to the SDP Answer. The identifier #D is an identifier of a manner (which is denoted as an obtaining manner #2) that is indicated by the AS #1 and that is used by the terminal device #1 to obtain the installation file of the application #1. The obtaining manner #2 may be an obtaining manner in the obtaining manners A to D. In addition, the obtaining manner #2 may be the same as or different from the obtaining manner #1. This is not particularly limited in this application.

Therefore, the terminal device #1 obtains the installation file of the application #1 based on the obtaining manner (namely, the obtaining manner #2) indicated by the identifier #D carried in the SDP Answer.

It should be understood that the solution in which the identifier #A, the identifier #B, and the identifier #C are carried in one process of sending an SDP Offer shown in FIG. 5 is merely an example for description. This application is not limited thereto. For example, the terminal device may alternatively initiate an SDP Offer for a plurality of times. For example, a first-time SDP Offer carries identifiers of a plurality of applications and the identifier of the terminal device. In addition, the first-time SDP Offer carries an identifier of an application whose data is allowed to be transmitted through the IMS and an identifier of a target manner corresponding to the application. To be specific, the terminal device #1 adds the identifier #A and the identifier #B to an SDP Offer #1, and adds the identifier #A, the identifier #B, and the identifier #C to an SDP Offer #2 after determining that the data of the application indicated by the identifier #B is allowed to be transmitted through the IMS.

In a possible implementation, when the SDP Offer is used to request to establish the data channel between the terminal device #1 and the terminal device #2, the AS #1 may further determine a manner (which is denoted as an obtaining manner #3) in which the terminal device #2 obtains the installation file of the application #1. The obtaining manner #3 may be an obtaining manner in the obtaining manners A to D. In addition, the obtaining manner #3 may be the same as or different from the obtaining manner #2. This is not particularly limited in this application.

It is assumed that an identifier of the obtaining manner #3 is an identifier #E. When the identifier #E is the same as the identifier #C, the AS #1 may forward the SDP Offer to the terminal device #2. When the identifier #E is different from the identifier #C, the AS #1 may modify the identifier #C in the SDP Offer to the identifier #E, and forward a modified SDP Offer to the terminal device #2.

Therefore, the terminal device #2 obtains the installation file of the application #1 based on the obtaining manner (namely, the obtaining manner #3) indicated by the identifier #E carried in the SDP Offer.

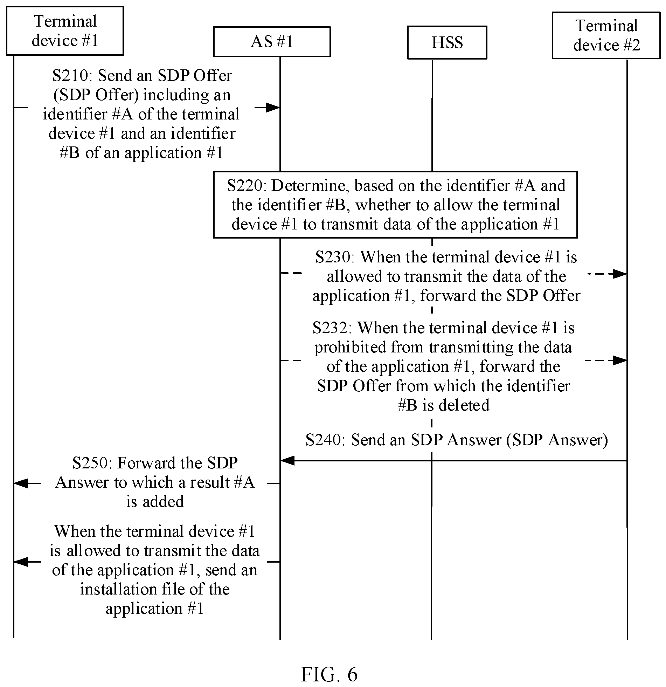

FIG. 6 shows another example of the process of establishing a data channel. Different from the process shown in FIG. 4, if the AS #1 determines to allow the terminal device #1 to transmit the data of the application #1 through the IMS (in other words, the result #A is the result #1), the AS #1 may further send the installation file of the application #1 to the terminal device #1.

The AS #1 may store a correspondence between identifiers of a plurality of applications and a plurality of installation files (which are specifically storage space of the installation files). To be specific, each installation file is an installation file of an application indicated by a corresponding identifier.

Table 4 below shows an example of the correspondence.

**Table 4**

| Identifier of an application | Storage space of an installation file |
|---|---|
| Identifier a | Storage space a |
| Identifier b | Storage space b |
| ... | ... |
| Identifier n | Storage space n |

For example, the AS #1 may establish a data channel #C with the terminal device #1. The data channel #C is used to transmit the installation file of the application #1.

In addition, an implementation shown in FIG. 6 and the implementation shown in FIG. 5 may be used in combination. To be specific, if the AS #1 determines to allow the terminal device #1 to transmit the data of the application #1 through the IMS (in other words, the result #A is the result #1), and the AS #1 determines that the manner in which the terminal device #1 obtains the installation file of the application #1 is an obtaining manner #B, the AS #1 may send the installation file of the application #1 to the terminal device #1.

By way of example, and not limitation, in this application, an action of sending, by the AS #1, the installation file of the application #1 to the terminal device #1 may alternatively be performed based on a request of the terminal device #1.

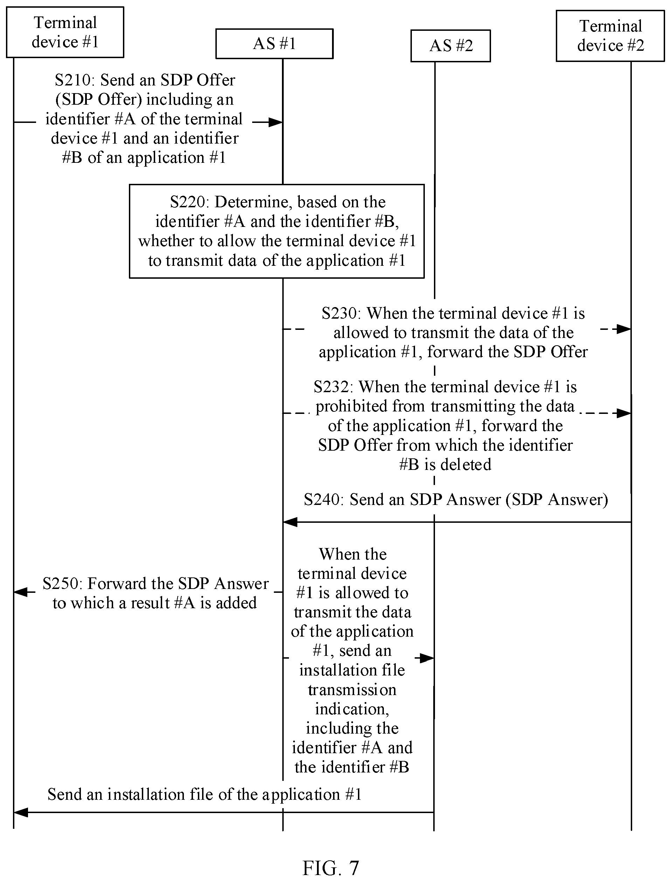

FIG. 7 shows another example of the process of establishing a data channel. Different from the process shown in FIG. 4, if the AS #1 determines to allow the terminal device #1 to transmit the data of the application #1 through the IMS (in other words, the result #A is the result #1), the AS #1 may further send an installation file transmission indication to an AS #2. The transmission indication is used to indicate the AS #2 to send the installation file of the application #1 to the terminal device #1. The installation file transmission indication may include the identifier (namely, the identifier #B) of the application #1 and the identifier (namely, the identifier #A) of the terminal device #1.

Therefore, the AS #2 may further send the installation file of the application #1 to the terminal device #1.

The AS #2 may be an AS configured to store installation files of a plurality of applications. The AS #2 is communicatively connected to the AS #1.

In addition, the AS #2 stores a correspondence between identifiers of the plurality of applications and a plurality of installation files (which are specifically storage space of the installation files), for example, as shown in Table 4 above.

In addition, an implementation shown in FIG. 7 and the implementation shown in FIG. 5 may be used in combination. To be specific, if the AS #1 determines to allow the terminal device #1 to transmit the data of the application #1 through the IMS (in other words, the result #A is the result #1), and the AS #1 determines that the manner in which the terminal device #1 obtains the installation file of the application #1 is the obtaining manner #B, the AS #1 may send the installation file transmission indication to the AS #2.

By way of example, and not limitation, in this application, an action of sending, by the AS #1, the installation file transmission indication to the AS #2 may alternatively be performed based on a request of the terminal device #1.

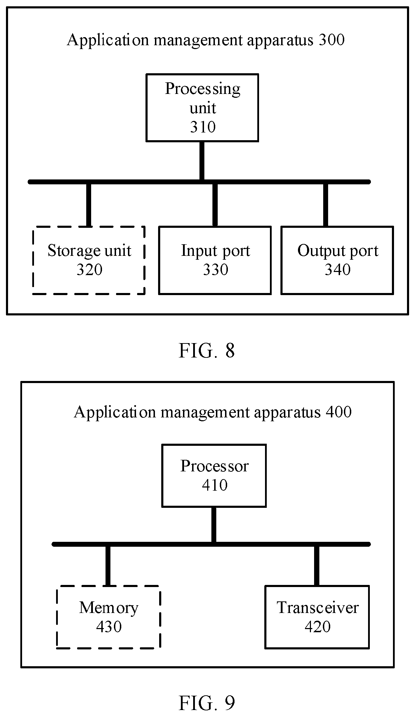

Based on the foregoing methods, FIG. 8 is a schematic diagram of an application management apparatus 300 according to an embodiment of this application.

The apparatus 300 may be a network device (for example, a CSCF or an AS #1), or may be a chip or a circuit, for example, a chip or a circuit that may be disposed in the network device.

Alternatively, the apparatus 300 may be a terminal device (for example, a terminal device #1), or may be a chip or a circuit, for example, a chip or a circuit that may be disposed in the terminal device.

The apparatus 300 may include a processing unit 310 (and optionally, may further include a storage unit 320). The storage unit 320 is configured to store instructions.

In a possible manner, the processing unit 310 is configured to execute the instructions stored in the storage unit 320, so that the apparatus 300 implements the steps performed by a network device (for example, the CSCF or the AS #1) in the foregoing methods.

In another possible manner, the processing unit 310 is configured to execute the instructions stored in the storage unit 320, so that the apparatus 300 implements the steps performed by a terminal device (for example, the terminal device #1) in the foregoing methods.

Further, the apparatus 300 may further include an input port 330 (namely, an example of a communication unit) and an output port 340 (namely, another example of a transceiver unit). Further, the processing unit 310, the storage unit 320, the input port 330, and the output port 340 may communicate with each other through an internal connection path, to transmit a control signal and/or a data signal. The storage unit 320 is configured to store a computer program. The processing unit 310 may be configured to invoke the computer program from the storage unit 320 and run the computer program, to complete the steps of the terminal device in the foregoing methods. The storage unit 320 may be integrated into the processing unit 310, or may be disposed separately from the processing unit 310.

Optionally, in a possible manner, the input port 330 may be a receiver, and the output port 340 is a transmitter. The receiver and the transmitter may be a same physical entity or different physical entities. When the receiver and the transmitter are the same physical entity, the receiver and the transmitter may be collectively referred to as a transceiver.

Optionally, in another possible manner, the input port 330 is an input interface, and the output port 340 is an output interface.

In an implementation, it may be considered that functions of the input port 330 and the output port 340 are implemented through a transceiver circuit or a dedicated transceiver chip. It may be considered that the processing unit 310 is implemented through a dedicated processing chip, a processing circuit, a processing unit, or a general-purpose chip.

In another implementation, it may be considered that the terminal device provided in this embodiment of this application is implemented through a general-purpose computer. To be specific, program code for implementing functions of the processing unit 310, the input port 330, and the output port 340 is stored in the storage unit 320. A general-purpose processing unit executes the code in the storage unit 320 to implement the functions of the processing unit 310, the input port 330, and the output port 340.

When the apparatus 300 is a communication device (for example, the network device or the terminal device), the communication device includes a processor, a memory, a radio frequency circuit, an antenna, and an input/output apparatus. The processor is mainly configured to process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus. When data needs to be sent, after performing baseband processing on the to-be-sent data, the processor outputs a baseband signal to the radio frequency circuit. The radio frequency circuit performs radio frequency processing on the baseband signal and then sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, the memory may also be referred to as a storage medium, a storage device, or the like. The memory may be disposed independent of the processor, or may be integrated with the processor. This is not limited in this embodiment of this application. In this case, the processor having a processing function may be considered as the processing unit 310 of the terminal device. The processing unit 310 may also be referred to as a processor, a processing board, a processing module, a processing apparatus, or the like. In addition, in this case, a receiving machine, a receiver, a receiver circuit, or the like may be considered as the input port 330. A transmitting machine, a transmitter, a transmitter circuit, or the like may be considered as the output port 340.

When the apparatus 300 is a chip, the chip includes a transceiver circuit and a processing circuit. The transceiver circuit may be an input/output circuit or a communication interface. The processing circuit may be a processor, a microprocessor, or an integrated circuit integrated on the chip. The input circuit may be an input pin. The output circuit may be an output pin. The processing circuit may be a transistor, a gate circuit, a trigger, any logic circuit, or the like. An input signal received by the input circuit may be received and input by, for example, but not limited to, a receiver. A signal output by the output circuit may be output to, for example, but not limited to, a transmitter and transmitted by the transmitter. In addition, the input circuit and the output circuit may be different circuits. Alternatively, the input circuit and the output circuit may be a same circuit. In this case, the circuit is used as the input circuit and the output circuit at different moments.

When the apparatus 300 is configured on or is a network device (for example, the CSCF or the AS #1), the input port 330 is configured to receive first information from a first terminal device, where the first information includes an identifier of a first application and an identifier of the first terminal device. The processing unit 310 is configured to: obtain user data of the first terminal device based on the identifier of the first terminal device, where the user data of the first terminal device includes an identifier of an authorized application corresponding to the first terminal device, and/or the user data of the first terminal device includes an identifier of an unauthorized application corresponding to the first terminal device; and determine, based on the user data of the first terminal device, whether to allow the first terminal device to transmit data of the first application.

Optionally, the output port 340 is configured to send second information to a second network device, where the second information is used to request the user data of the first terminal device, the second information includes the identifier of the first terminal device, and the second network device is configured to store user data of each terminal device among a plurality of terminal devices including the first terminal device. The input port 330 is configured to receive the user data of the first terminal device from the second network device.

Optionally, a first network device is a call session control function CSCF device.

In this case, the first information is a registration request of an internet protocol multimedia subsystem IMS network.

Optionally, the output port 340 is configured to send a registration response to the first terminal device. The registration response includes a result indicating whether the first terminal device is allowed to transmit the data of the first application.

Optionally, the first network device is a first AS.

In this case, the first information includes a first data channel establishment request.

Optionally, the first data channel establishment request further includes third information. The third information is used to indicate a first obtaining manner among a plurality of obtaining manners. The first obtaining manner is a manner that is requested to be used by the first terminal device to obtain an installation file of the first application. The plurality of obtaining manners include at least one of the following manners: a manner of obtaining from a third party, a manner of downloading from an application server of a network in which the first terminal device is located, a manner of downloading from an application server of a network in which a second terminal device is located, and a manner of obtaining from the second terminal device. The second terminal device is a communication peer end of the first terminal device.

Optionally, the output port 340 is configured to send a first data channel establishment response to the first terminal device. The first data channel establishment response includes the result indicating whether the first terminal device is allowed to transmit the data of the first application.

Optionally, the first data channel establishment response further includes fourth information. The fourth information is used to indicate a second obtaining manner among the plurality of obtaining manners. The second obtaining manner is a manner that is indicated by the first network device and that is used by the first terminal device to obtain the installation file of the first application. The plurality of obtaining manners include at least one of the following manners: the manner of obtaining from the third party, the manner of downloading from the application server of the network in which the first terminal device is located, the manner of downloading from the application server of the network in which the second terminal device is located, and the manner of obtaining from the second terminal device. The second terminal device is the communication peer end of the first terminal device.

Optionally, when the first terminal device is not allowed to transmit the data of the first application, the processing unit 310 is configured to delete related information of the first application from the first data channel establishment request. The output port 340 is configured to forward, to the second terminal device, the first data channel establishment request from which the related information of the first application is deleted. The second terminal device is the communication peer end of the first terminal device.

Optionally, when the first terminal device is allowed to transmit the data of the first application, the output port 340 is configured to forward the first data channel establishment request to the second terminal device. The first data channel establishment request includes fifth information. The fifth information is used to indicate that the first terminal device is allowed to transmit the data of the first application. The fifth information includes the identifier of the first application.

Optionally, the first data channel establishment request forwarded by the first network device to the second terminal device includes sixth information. The sixth information is used to indicate a third obtaining manner among a plurality of obtaining manners. The third obtaining manner is a manner that is indicated by the first network device and that is used by the second terminal device to obtain the installation file of the first application. The plurality of obtaining manners include at least one of the following manners: the manner of obtaining from the third party, the manner of downloading from the application server of the network in which the first terminal device is located, the manner of downloading from the application server of the network in which the second terminal device is located, and a manner of obtaining from the first terminal device.

Optionally, when the first terminal device is allowed to transmit the data of the first application, the output port 340 is configured to send the installation file of the first application to the first terminal device and/or the second terminal device. The second terminal device is the communication peer end of the first terminal device.

Optionally, when the first terminal device is allowed to transmit the data of the first application, the output port 340 is configured to send seventh information to a second AS. The seventh information is used to indicate the second AS to send the installation file of the first application to the first terminal device and/or the second terminal device. The seventh information includes the identifier of the first terminal device and/or an identifier of the second terminal device and the identifier of the first application. The second AS is configured to store installation files of a plurality of applications including the first application.

When the apparatus 300 is configured on or is a terminal device (for example, the terminal device #1), the processing unit 310 is configured to generate first information. The first information includes an identifier of a first application and an identifier of the first terminal device. The output port 340 is configured to send the first information to a first network device. The first information is used to determine whether the first terminal device is allowed to transmit data of the first application.

Optionally, the first network device is a call session control function CSCF device.

Optionally, the first information is a registration request of an internet protocol multimedia subsystem IMS network.

Optionally, the input port 330 is configured to receive a registration response from the first network device. The registration response includes a result indicating whether the first terminal device is allowed to transmit the data of the first application.

Optionally, the first network device is a first AS.

Optionally, the first information includes a first data channel establishment request.

Optionally, the first data channel establishment request further includes third information. The third information is used to indicate a first obtaining manner among a plurality of obtaining manners. The first obtaining manner is a manner that is requested to be used by the first terminal device to obtain an installation file of the first application. The plurality of obtaining manners include at least one of the following manners: a manner of obtaining from a third party, a manner of downloading from an application server of a network in which the first terminal device is located, a manner of downloading from an application server of a network in which a second terminal device is located, and a manner of obtaining from the second terminal device. The second terminal device is a communication peer end of the first terminal device.

Optionally, the input port 330 is further configured to receive a first data channel establishment response from the first network device. The first data channel establishment response includes the result indicating whether the first terminal device is allowed to transmit the data of the first application.

Optionally, the first data channel establishment response further includes fourth information. The fourth information is used to indicate a second obtaining manner among the plurality of obtaining manners. The second obtaining manner is a manner that is indicated by the first network device and that is used by the apparatus 300 to obtain the installation file of the first application. The plurality of obtaining manners include at least one of the following manners: the manner of obtaining from the third party, the manner of downloading from the application server of the network in which the first terminal device is located, the manner of downloading from the application server of the network in which the second terminal device is located, and the manner of obtaining from the second terminal device. The second terminal device is the communication peer end of the first terminal device. In addition, the processing unit 310 is configured to obtain the installation file of the first application based on the second obtaining manner.

Optionally, the input port 330 is configured to receive the installation file of the first application from the first network device.

Optionally, the input port 330 is configured to receive the installation file of the first application from a second AS. The second AS is configured to store installation files of a plurality of applications including the first application.

The foregoing listed functions and actions of the modules or units in the apparatus 300 are merely examples for description. When the apparatus 300 is configured on or is a network device (for example, the CSCF or the AS #1), the modules or units in the apparatus 300 may be configured to perform the actions or processing processes performed by the network device in the foregoing methods.

When the apparatus 300 is configured on or is a terminal device (for example, the terminal device #1), the modules or units in the apparatus 300 may be configured to perform the actions or processing processes performed by the terminal device in the foregoing methods.

To avoid repetition, detailed descriptions thereof are omitted herein.

For concepts, explanations, detailed descriptions, and other steps of the apparatus 300 that are related to the technical solutions provided in embodiments of this application, refer to the descriptions of the content in the foregoing methods or other embodiments. Details are not described herein again.

FIG. 9 shows an application management apparatus 400 according to an embodiment of this application. The apparatus 400 includes a processor 410 and a transceiver 420. The processor 410 and the transceiver 420 communicate with each other through an internal connection path, and the processor 410 is configured to execute instructions, to control the transceiver 420 to send a signal and/or receive a signal.

Optionally, the apparatus 400 may further include a memory 430. The memory 430 communicates with the processor 410 and the transceiver 420 through internal connection paths. The memory 430 is configured to store instructions, and the processor 410 may execute the instructions stored in the memory 430. In a possible implementation, the apparatus 400 is configured to implement the procedures and steps corresponding to a network device (for example, the CSCF or the AS #1) in the foregoing method embodiments. In another possible implementation, the apparatus 400 is configured to implement the procedures and steps corresponding to a terminal device (for example, the terminal device #1) in the foregoing method embodiments.

It should be understood that the apparatus 400 may be specifically the network device or the terminal device in the foregoing embodiments, or may be a chip or a chip system. Correspondingly, the transceiver 420 may be a transceiver circuit of the chip. This is not limited herein. Specifically, the apparatus 400 may be configured to perform the steps and/or procedures corresponding to the network device or the terminal device in the foregoing method embodiments. Optionally, the memory 430 may include a read-only memory and a random access memory, and provide instructions and data for the processor. A part of the memory may further include a nonvolatile random access memory. For example, the memory may further store information about a device type. The processor 410 may be configured to execute the instructions stored in the memory. In addition, when the processor 410 executes the instructions stored in the memory, the processor 410 is configured to perform the steps and/or procedures corresponding to the network device or the terminal device in the foregoing method embodiments.

In an implementation process, the steps in the foregoing methods may be implemented by using a hardware integrated logic circuit in the processor, or by using instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, many forms of RAMs may be used, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these and any memory of another proper type.

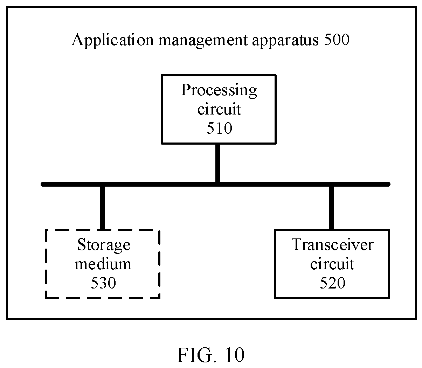

FIG. 10 shows an application management apparatus 500 according to an embodiment of this application. The apparatus 500 includes a processing circuit 510 and a transceiver circuit 520. The processing circuit 510 and the transceiver circuit 520 communicate with each other through an internal connection path, and the processing circuit 510 is configured to execute instructions, to control the transceiver circuit 520 to send a signal and/or receive a signal.

Optionally, the apparatus 500 may further include a storage medium 530. The storage medium 530 communicates with the processing circuit 510 and the transceiver circuit 520 through internal connection paths. The storage medium 530 is configured to store instructions, and the processing circuit 510 may execute the instructions stored in the storage medium 530. In a possible implementation, the apparatus 500 is configured to implement the procedures and steps corresponding to a network device (for example, the CSCF or the AS #1) in the foregoing method embodiments. In another possible implementation, the apparatus 500 is configured to implement the procedures and steps corresponding to a terminal device (for example, the terminal device #1) in the foregoing method embodiments.

Based on the methods provided in embodiments of this application, this application further provides a computer program product. The computer program product includes computer program code. When the computer program code is run on a computer, the computer is enabled to perform the method in any implementation in FIG. 3 to FIG. 7.

Based on the methods provided in embodiments of this application, this application further provides a computer-readable medium. The computer-readable medium stores program code. When the program code is run on a computer, the computer is enabled to perform the method in any implementation in FIG. 3 to FIG. 7.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit. Alternatively, each of the units may exist alone physically. Alternatively, two or more units may be integrated into one unit.

When the functions are implemented in a form of a software functional unit and sold or used as an independent product, the functions may be stored in a computer-readable storage medium. Based on such an understanding, the technical solutions in this application essentially, the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform a part or all of the steps of the methods in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. An application management method applied to an Internet Protocol Multimedia Subsystem, IMS, system, comprising:
receiving (S110), by a first network device, first information from a first terminal device, wherein the first information comprises an identifier of a first application and an identifier of the first terminal device;
obtaining (S126), by the first network device, user data of the first terminal device based on the identifier of the first terminal device, wherein the user data of the first terminal device comprises an identifier of an authorized application corresponding to the first terminal device, and/or the user data of the first terminal device comprises an identifier of an unauthorized application corresponding to the first terminal device; and
determining (S128), by the first network device based on the user data of the first terminal device, whether to allow the first terminal device to transmit data of the first application,
**characterized in that** the first network device is a first AS, and
the first information comprises a first data channel establishment request,
wherein the first data channel establishment request further comprises third information, the third information is used to indicate a first obtaining manner among a plurality of obtaining manners, the first obtaining manner is a manner that is requested to be used by the first terminal device to obtain an installation file of the first application, and the plurality of obtaining manners comprise at least one of the following manners:
a manner of obtaining from a third party, a manner of downloading from an application server of a network in which the first terminal device is located, a manner of downloading from an application server of a network in which a second terminal device is located, and a manner of obtaining from the second terminal device, wherein the second terminal device is a communication peer end of the first terminal device,
wherein the method further comprises:
sending, by the first network device, a first data channel establishment response to the first terminal device, wherein the first data channel establishment response comprises the result indicating whether the first terminal device is allowed to transmit the data of the first application, and
wherein the first data channel establishment response further comprises fourth information, the fourth information is used to indicate a second obtaining manner among the plurality of obtaining manners, and the second obtaining manner is a manner that is indicated by the first network device and that is used by the first terminal device to obtain the installation file of the first application, and the plurality of obtaining manners comprise at least one of the following manners:
the manner of obtaining from the third party, the manner of downloading from the application server of the network in which the first terminal device is located, the manner of downloading from the application server of the network in which the second terminal device is located, and the manner of obtaining from the second terminal device, wherein the second terminal device is the communication peer end of the first terminal device.

2. The method according to claim 1, wherein the obtaining, by the first network device, user data of the first terminal device based on the identifier of the first terminal device comprises:
sending, by the first network device, second information to a second network device, wherein the second information is used to request the user data of the first terminal device, the second information comprises the identifier of the first terminal device, and the second network device is configured to store user data of each terminal device among a plurality of terminal devices comprising the first terminal device; and
receiving, by the first network device, the user data of the first terminal device from the second network device.

3. The method according to claim 1 or 2, wherein the method further comprises:
when the first terminal device is not allowed to transmit the data of the first application, deleting, by the first network device, related information of the first application from the first data channel establishment request, and forwarding, to the second terminal device, the first data channel establishment request from which the related information of the first application is deleted, wherein the second terminal device is the communication peer end of the first terminal device.

4. The method according to claim 1 or 2, wherein the method further comprises:
when the first terminal device is allowed to transmit the data of the first application, forwarding, by the first network device, the first data channel establishment request to the second terminal device, wherein the first data channel establishment request comprises fifth information, the fifth information is used to indicate that the first terminal device is allowed to transmit the data of the first application, and the fifth information comprises the identifier of the first application.

5. The method according to any one of claims 1 to 4, wherein when the first terminal device is allowed to transmit the data of the first application, the method further comprises:
sending, by the first network device, the installation file of the first application to the first terminal device and/or the second terminal device, wherein the second terminal device is the communication peer end of the first terminal device; or
sending, by the first network device, seventh information to a second AS, wherein the seventh information is used to indicate the second AS to send the installation file of the first application to the first terminal device and/or the second terminal device, the seventh information comprises the identifier of the first terminal device and/or an identifier of the second terminal device and the identifier of the first application, and the second AS is configured to store installation files of a plurality of applications comprising the first application.

6. An application management method applied to an Internet Protocol Multimedia Subsystem, IMS, system, comprising:
generating, by a first terminal device, first information, wherein the first information comprises an identifier of a first application and an identifier of the first terminal device; and
sending, by the first terminal device, the first information to a first network device, wherein the first information is used to determine whether the first terminal device is allowed to transmit data of the first application,
**characterized in that** the first network device is a first AS, and
the first information comprises a first data channel establishment request,
wherein the first data channel establishment request further comprises third information, the third information is used to indicate a first obtaining manner among a plurality of obtaining manners, the first obtaining manner is a manner that is requested to be used by the first terminal device to obtain an installation file of the first application, and the plurality of obtaining manners comprise at least one of the following manners:
a manner of obtaining from a third party, a manner of downloading from an application server of a network in which the first terminal device is located, a manner of downloading from an application server of a network in which a second terminal device is located, and a manner of obtaining from the second terminal device, wherein the second terminal device is a communication peer end of the first terminal device,
wherein the method further comprises:
receiving, by the first terminal device, a first data channel establishment response from the first network device, wherein the first data channel establishment response comprises the result indicating whether the first terminal device is allowed to transmit the data of the first application, and
wherein the first data channel establishment response further comprises fourth information, the fourth information is used to indicate a second obtaining manner among the plurality of obtaining manners, and the second obtaining manner is a manner that is indicated by the first network device and that is used by the first terminal device to obtain the installation file of the first application, and the plurality of obtaining manners comprise at least one of the following manners: the manner of obtaining from the third party, the manner of downloading from the application server of the network in which the first terminal device is located, the manner of downloading from the application server of the network in which the second terminal device is located, and the manner of obtaining from the second terminal device, wherein the second terminal device is the communication peer end of the first terminal device; and
the method further comprises:
obtaining, by the first terminal device, the installation file of the first application based on the second obtaining manner.

7. A first network device, comprising means configured to perform the steps of the method of any one of claims 1 to 5.

8. A first terminal device, comprising means configured to perform the steps of the method of claim 6.

## Patentansprüche

1. Anwendungsverwaltungsverfahren angewendet auf ein Internet Protocol Multimedia Subsystem (IMS)-System, umfassend:
Empfangen (S110), durch eine erste Netzwerkvorrichtung, von ersten Informationen von einer ersten Endvorrichtung, wobei die ersten Informationen eine Kennung einer ersten Anwendung und eine Kennung der ersten Endvorrichtung umfassen;
Erhalten (S126), durch die erste Netzwerkvorrichtung, von Benutzerdaten der ersten Endvorrichtung basierend auf der Kennung der ersten Endvorrichtung, wobei die Benutzerdaten der ersten Endvorrichtung eine Kennung einer autorisierten, der ersten Endvorrichtung entsprechenden Anwendung umfassen und/oder die Benutzerdaten der ersten Endvorrichtung eine Kennung einer nicht autorisierten, der ersten Endvorrichtung entsprechenden Anwendung umfassen; und
Bestimmen (S128), durch die erste Netzwerkvorrichtung basierend auf den Benutzerdaten der ersten Endvorrichtung, ob es der ersten Endvorrichtung ermöglicht wird, Daten der ersten Anwendung zu übertragen,
**dadurch gekennzeichnet, dass** die erste Netzwerkvorrichtung ein erster AS ist und
die ersten Informationen eine erste Datenkanalaufbauanforderung umfassen,
wobei die erste Datenkanalaufbauanforderung ferner dritte Informationen umfasst, die dritten Informationen verwendet werden, um eine erste Art des Erhaltens aus einer Vielzahl von Arten des Erhaltens anzugeben, die erste Art des Erhaltens eine Art ist, die angefordert wird, um durch die erste Endvorrichtung verwendet zu werden, um eine Installationsdatei der ersten Anwendung zu erhalten, und die Vielzahl von Arten des Erhaltens mindestens eines von den folgenden Arten umfasst:
eine Art des Erhaltens von einem Dritten, eine Art des Herunterladens von einem Anwendungsserver eines Netzwerks, in dem sich die erste Endvorrichtung befindet, eine Art des Herunterladens von einem Anwendungsserver eines Netzwerks, in dem sich eine zweite Endvorrichtung befindet, und eine Art des Erhaltens von der zweiten Endvorrichtung, wobei die zweite Endvorrichtung ein Kommunikations-Peer-Ende der ersten Endvorrichtung ist,
wobei das Verfahren ferner Folgendes umfasst:
Senden, durch die erste Netzwerkvorrichtung, einer ersten Datenkanalaufbauantwort an die erste Endvorrichtung, wobei die erste Datenkanalaufbauantwort das Ergebnis umfasst, das angibt, ob es der ersten Endvorrichtung ermöglicht wird, die Daten der ersten Anwendung zu übertragen, und
wobei die erste Datenkanalaufbauantwort ferner vierte Informationen umfasst, die vierten Informationen verwendet werden, um eine zweite Art des Erhaltens aus der Vielzahl von Arten des Erhaltens anzugeben, und die zweite Art des Erhaltens eine Art ist, die durch die erste Netzwerkvorrichtung angegeben wird und die durch die erste Endvorrichtung verwendet wird, um die Installationsdatei der ersten Anwendung zu erhalten, und die Vielzahl von Arten des Erhaltens mindestens eines von den folgenden Arten umfasst:
die Art des Erhaltens von dem Dritten, die Art des Herunterladens von dem Anwendungsserver des Netzwerks, in dem sich die erste Endvorrichtung befindet, die Art des Herunterladens von dem Anwendungsserver des Netzwerks, in dem sich die zweite Endvorrichtung befindet, und die Art des Erhaltens von der zweiten Endvorrichtung, wobei die zweite Endvorrichtung das Kommunikations-Peer-Ende der ersten Endvorrichtung ist.

2. Verfahren nach Anspruch 1, wobei das Erhalten, durch die erste Netzwerkvorrichtung, von Benutzerdaten der ersten Endvorrichtung basierend auf der Kennung der ersten Endvorrichtung Folgendes umfasst:
Senden, durch die erste Netzwerkvorrichtung, von zweiten Informationen an eine zweite Netzwerkvorrichtung, wobei die zweiten Informationen verwendet werden, um die Benutzerdaten der ersten Endvorrichtung anzufordern, die zweiten Informationen die Kennung der ersten Endvorrichtung umfassen und die zweite Netzwerkvorrichtung konfiguriert ist, um Benutzerdaten jeder Endvorrichtung aus einer die erste Endvorrichtung umfassenden Vielzahl von Endvorrichtungen zu speichern; und
Empfangen, durch die erste Netzwerkvorrichtung, der Benutzerdaten der ersten Endvorrichtung von der zweiten Netzwerkvorrichtung.

3. Verfahren nach Anspruch 1 oder 2, wobei das Verfahren ferner Folgendes umfasst:
wenn es der ersten Endvorrichtung nicht ermöglicht wird, die Daten der ersten Anwendung zu übertragen, Löschen, durch die erste Netzwerkvorrichtung, betreffender Informationen der ersten Anwendung aus der ersten Datenkanalaufbauanforderung und Weiterleiten, an die zweite Endvorrichtung, der ersten Datenkanalaufbauanforderung, aus der die betreffenden Informationen der ersten Anwendung gelöscht sind, wobei die zweite Endvorrichtung das Kommunikations-Peer-Ende der ersten Endvorrichtung ist.

4. Verfahren nach Anspruch 1 oder 2, wobei das Verfahren ferner Folgendes umfasst:
wenn es der ersten Endvorrichtung ermöglicht wird, die Daten der ersten Anwendung zu übertragen, Weiterleiten, durch die erste Netzwerkvorrichtung, der ersten Datenkanalaufbauanforderung an die zweite Endvorrichtung, wobei die erste Datenkanalaufbauanforderung fünfte Informationen umfasst, die fünften Informationen verwendet werden, um anzugeben, dass es der ersten Endvorrichtung ermöglicht wird, die Daten der ersten Anwendung zu übertragen, und die fünften Informationen die Kennung der ersten Anwendung umfassen.

5. Verfahren nach einem der Ansprüche 1 bis 4, wobei, wenn es der ersten Endvorrichtung ermöglicht wird, die Daten der ersten Anwendung zu übertragen, das Verfahren ferner Folgendes umfasst:
Senden, durch die erste Netzwerkvorrichtung, der Installationsdatei der ersten Anwendung an die erste Endvorrichtung und/oder die zweite Endvorrichtung, wobei die zweite Endvorrichtung das Kommunikations-Peer-Ende der ersten Endvorrichtung ist; oder
Senden, durch die erste Netzwerkvorrichtung, von siebten Informationen an einen zweiten AS, wobei die siebten Informationen verwendet werden, um gegenüber dem zweiten AS anzugeben, die Installationsdatei der ersten Anwendung an die erste Endvorrichtung und/oder die zweite Endvorrichtung zu senden, die siebten Informationen die Kennung der ersten Endvorrichtung und/oder eine Kennung der zweiten Endvorrichtung und die Kennung der ersten Anwendung umfassen und der zweite AS konfiguriert ist, um Installationsdateien einer die erste Anwendung umfassenden Vielzahl von Anwendungen zu speichern.

6. Anwendungsverwaltungsverfahren angewendet auf ein Internet Protocol Multimedia Subsystem (IMS)-System, umfassend:
Generieren, durch eine erste Endvorrichtung, von ersten Informationen, wobei die ersten Informationen eine Kennung einer ersten Anwendung und eine Kennung der ersten Endvorrichtung umfassen; und
Senden, durch die erste Endvorrichtung, der ersten Informationen an eine erste Netzwerkvorrichtung, wobei die ersten Informationen verwendet werden, um zu bestimmen, ob es der ersten Endvorrichtung ermöglicht wird, Daten der ersten Anwendung zu übertragen,
**dadurch gekennzeichnet, dass** die erste Netzwerkvorrichtung ein erster AS ist und
die ersten Informationen eine erste Datenkanalaufbauanforderung umfassen,
wobei die erste Datenkanalaufbauanforderung ferner dritte Informationen umfasst, die dritten Informationen verwendet werden, um eine erste Art des Erhaltens aus einer Vielzahl von Arten des Erhaltens anzugeben, die erste Art des Erhaltens eine Art ist, die angefordert wird, um durch die erste Endvorrichtung verwendet zu werden, um eine Installationsdatei der ersten Anwendung zu erhalten, und die Vielzahl von Arten des Erhaltens mindestens eines von den folgenden Arten umfasst:
eine Art des Erhaltens von einem Dritten, eine Art des Herunterladens von einem Anwendungsserver eines Netzwerks, in dem sich die erste Endvorrichtung befindet, eine Art des Herunterladens von einem Anwendungsserver eines Netzwerks, in dem sich eine zweite Endvorrichtung befindet, und eine Art des Erhaltens von der zweiten Endvorrichtung, wobei die zweite Endvorrichtung ein Kommunikations-Peer-Ende der ersten Endvorrichtung ist,
wobei das Verfahren ferner Folgendes umfasst:
Empfangen, durch die erste Endvorrichtung, einer ersten Datenkanalaufbauantwort von der ersten Netzwerkvorrichtung, wobei die erste Datenkanalaufbauantwort das Ergebnis umfasst, das angibt, ob es der ersten Endvorrichtung ermöglicht wird, die Daten der ersten Anwendung zu übertragen, und
wobei die erste Datenkanalaufbauantwort ferner vierte Informationen umfasst, die vierten Informationen verwendet werden, um eine zweite Art des Erhaltens aus einer Vielzahl von Arten des Erhaltens anzugeben, und die zweite Art des Erhaltens eine Art ist, die durch die erste Netzwerkvorrichtung angegeben wird und die durch die erste Endvorrichtung verwendet wird, um die Installationsdatei der ersten Anwendung zu erhalten, und die Vielzahl von Arten des Erhaltens mindestens eines von den folgenden Arten umfasst: die Art des Erhaltens von dem Dritten, die Art des Herunterladens von dem Anwendungsserver des Netzwerks, in dem sich die erste Endvorrichtung befindet, die Art des Herunterladens von dem Anwendungsserver des Netzwerks, in dem sich die zweite Endvorrichtung befindet, und die Art des Erhaltens von der zweiten Endvorrichtung, wobei die zweite Endvorrichtung das Kommunikations-Peer-Ende der ersten Endvorrichtung ist; und
das Verfahren ferner Folgendes umfasst:
Erhalten, durch die erste Endvorrichtung, der Installationsdatei der ersten Anwendung basierend auf der zweiten Art des Erhaltens.

7. Erste Netzwerkvorrichtung, umfassend Mittel, die konfiguriert sind, um die Schritte des Verfahrens nach einem der Ansprüche 1 bis 5 durchzuführen.

8. Erste Endvorrichtung, umfassend Mittel, die konfiguriert sind, um die Schritte des Verfahrens nach Anspruch 6 durchzuführen.

## Revendications

1. Procédé de gestion d'application appliqué à un système de soussystème multimédia de protocole Internet, IMS, comprenant :
la réception (S110), par un premier dispositif de réseau, d'une première information provenant d'un premier dispositif terminal, dans lequel la première information comprend un identifiant d'une première application et un identifiant du premier dispositif terminal ;
l'obtention (S126), par le premier dispositif de réseau, des données utilisateur du premier dispositif terminal sur la base de l'identifiant du premier dispositif terminal, dans lequel les données utilisateur du premier dispositif terminal comprennent un identifiant d'une application autorisée correspondant au premier dispositif terminal, et/ou les données utilisateur du premier dispositif terminal comprennent un identifiant d'une application non autorisée correspondant au premier dispositif terminal ; et
la détermination (S128), par le premier dispositif de réseau sur la base des données utilisateur du premier dispositif terminal, du fait de savoir s'il convient d'autoriser le premier dispositif terminal à transmettre les données de la première application,
**caractérisé en ce que** le premier dispositif de réseau est un premier AS, et
la première information comprend une première demande d'établissement de canal de données,
dans lequel la première demande d'établissement de canal de données comprend en outre une troisième information, la troisième information est utilisée pour indiquer un premier mode d'obtention parmi une pluralité de modes d'obtention, le premier mode d'obtention est un mode que le premier dispositif terminal est censé utiliser pour obtenir un fichier d'installation de la première application, et la pluralité de modes d'obtention comprennent au moins l'un des modes suivants :
un mode d'obtention auprès d'un tiers, un mode de téléchargement depuis un serveur d'applications d'un réseau dans lequel se trouve le premier dispositif terminal, un mode de téléchargement depuis un serveur d'applications d'un réseau dans lequel se trouve un second dispositif terminal, et un mode d'obtention depuis le second dispositif terminal, dans lequel le second dispositif terminal est une extrémité homologue de communication du premier dispositif terminal,
dans lequel le procédé comprend en outre :
l'envoi, par le premier dispositif de réseau, d'une première réponse d'établissement de canal de données au premier dispositif terminal, dans lequel la première réponse d'établissement de canal de données comprend le résultat indiquant si le premier dispositif terminal est autorisé à transmettre les données de la première application, et
dans lequel la première réponse d'établissement de canal de données comprend en outre une quatrième information, la quatrième information est utilisée pour indiquer un second mode d'obtention parmi la pluralité de modes d'obtention, et le second mode d'obtention est un mode indiqué par le premier dispositif de réseau et utilisé par le premier dispositif terminal pour obtenir le fichier d'installation de la première application, et la pluralité de modes d'obtention comprend au moins l'un des modes suivants :
le mode d'obtention auprès du tiers, le mode de téléchargement depuis le serveur d'applications du réseau dans lequel se trouve le premier dispositif terminal, le mode de téléchargement depuis le serveur d'applications du réseau dans lequel se trouve le second dispositif terminal, et le mode d'obtention depuis le second dispositif terminal, dans lequel le second dispositif terminal est l'extrémité homologue de communication du premier dispositif terminal.

2. Procédé selon la revendication 1, dans lequel l'obtention, par le premier dispositif de réseau, des données utilisateur du premier dispositif terminal sur la base de l'identifiant du premier dispositif terminal comprend :
l'envoi, par le premier dispositif de réseau, d'une deuxième information à un second dispositif de réseau, dans lequel la deuxième information est utilisée pour demander les données utilisateur du premier dispositif terminal, la deuxième information comprend l'identifiant du premier dispositif terminal, et le second dispositif de réseau est configuré pour stocker les données utilisateur de chaque dispositif terminal parmi une pluralité de dispositifs terminaux comprenant le premier dispositif terminal ; et
la réception, par le premier dispositif terminal, des données utilisateur du premier dispositif terminal en provenance du second dispositif de réseau.

3. Procédé selon la revendication 1 ou 2, dans lequel le procédé comprend en outre :
lorsque le premier dispositif terminal n'est pas autorisé à transmettre les données de la première application, la suppression, par le premier dispositif de réseau, de l'information relative à la première application de la première demande d'établissement de canal de données et le transfert, au second dispositif terminal, de la première demande d'établissement de canal de données dont l'information relative à la première application a été supprimée, dans lequel le second dispositif terminal est l'extrémité homologue de communication du premier dispositif terminal.

4. Procédé selon la revendication 1 ou 2, dans lequel le procédé comprend en outre :
lorsque le premier dispositif terminal est autorisé à transmettre les données de la première application, le transfert, par le premier dispositif de réseau, de la première demande d'établissement de canal de données au second dispositif terminal, dans lequel la première demande d'établissement de canal de données comprend une cinquième information, la cinquième information est utilisée pour indiquer que le premier dispositif terminal est autorisé à transmettre les données de la première application, et la cinquième information comprend l'identifiant de la première application.

5. Procédé selon l'une quelconque des revendications 1 à 4, dans lequel lorsque le premier dispositif terminal est autorisé à transmettre les données de la première application, le procédé comprend en outre :
l'envoi, par le premier dispositif de réseau, du fichier d'installation de la première application au premier dispositif terminal et/ou au second dispositif terminal, dans lequel le second dispositif terminal est l'extrémité homologue de communication du premier dispositif terminal ; ou
l'envoi, par le premier dispositif de réseau, d'une septième information à un second AS, dans lequel la septième information est utilisée pour indiquer au second AS d'envoyer le fichier d'installation de la première application au premier dispositif terminal et/ou au second dispositif terminal, la septième information comprend l'identifiant du premier dispositif terminal et/ou un identifiant du second dispositif terminal et l'identifiant de la première application, et le second AS est configuré pour stocker les fichiers d'installation d'une pluralité d'applications comprenant la première application.

6. Procédé de gestion d'application appliqué à un système de soussystème multimédia de protocole Internet, IMS, comprenant :
la génération, par un premier dispositif terminal, d'une première information, dans lequel la première information comprend un identifiant d'une première application et un identifiant du premier dispositif terminal ; et
l'envoi, par le premier dispositif terminal, de la première information à un premier dispositif de réseau, dans lequel la première information est utilisée pour déterminer si le premier dispositif terminal est autorisé à transmettre des données de la première application,
**caractérisé en ce que** le premier dispositif de réseau est un premier AS, et
la première information comprend une première demande d'établissement de canal de données,
dans lequel la première demande d'établissement de canal de données comprend en outre une troisième information, la troisième information est utilisée pour indiquer un premier mode d'obtention parmi une pluralité de modes d'obtention, le premier mode d'obtention est un mode que le premier dispositif terminal est censé utiliser pour obtenir un fichier d'installation de la première application, et la pluralité de modes d'obtention comprennent au moins l'un des modes suivants :
un mode d'obtention auprès d'un tiers, un mode de téléchargement depuis un serveur d'applications d'un réseau dans lequel se trouve le premier dispositif terminal, un mode de téléchargement depuis un serveur d'applications d'un réseau dans lequel se trouve un second dispositif terminal, et un mode d'obtention depuis le second dispositif terminal, dans lequel le second dispositif terminal est une extrémité homologue de communication du premier dispositif terminal,
dans lequel le procédé comprend en outre :
la réception, par le premier dispositif terminal, d'une première réponse d'établissement de canal de données provenant du premier dispositif de réseau, dans lequel la première réponse d'établissement de canal de données comprend le résultat indiquant si le premier dispositif terminal est autorisé à transmettre les données de la première application, et
dans lequel la première réponse d'établissement de canal de données comprend en outre une quatrième information, la quatrième information est utilisée pour indiquer un second mode d'obtention parmi la pluralité de modes d'obtention, et le second mode d'obtention est un mode indiqué par le premier dispositif de réseau et utilisé par le premier dispositif terminal pour obtenir le fichier d'installation de la première application, et la pluralité de modes d'obtention comprend au moins l'un des modes suivants : le mode d'obtention auprès du tiers, le mode de téléchargement depuis le serveur d'applications du réseau sur lequel se trouve le premier dispositif terminal, le mode de téléchargement depuis le serveur d'applications du réseau sur lequel se trouve le second dispositif terminal, et le mode d'obtention depuis le second dispositif terminal, dans lequel le second dispositif terminal est l'extrémité homologue de communication du premier dispositif terminal ; et
le procédé comprend en outre :
l'obtention, par le premier dispositif terminal, du fichier d'installation de la première application sur la base du second mode d'obtention.

7. Premier dispositif de réseau, comprenant des moyens configurés pour effectuer les étapes du procédé selon l'une quelconque des revendications 1 à 5.

8. Premier dispositif terminal, comprenant des moyens configurés pour effectuer les étapes du procédé selon la revendication 6.
